# EUROPEAN PATENT APPLICATION

(11) **EP 2 034 729 A2**
(43) Date of publication of application: **11.03.2009**
(21) Application number: 08158014.4
(22) Date of filing: 11.06.2008
(51) Int. Cl.: H04N 7/167

(54) **Transmitting apparatus, receiving apparatus, and transmitting and receiving apparatus**

(30) Priority: 21.06.2007 JP 2007163611; 12.10.2007 JP 2007266835
(71) Applicant: Panasonic Corporation, Kadoma-shi Osaka 571-8501 (JP)
(72) Inventor: Ueno, Takafumi c/o Matsushita Electric Industrial Co., Ltd., Osaka 540-6207 (JP)
(74) Representative: Eisenführ, Speiser & Partner

(57) **Abstract**

In the present invention, in order that compatibility should be realized between contents protection based on a framework of restricted receiving in MPEG-2 broadcasting and contents protection using Right Object like in OMA DRM, a transmitting apparatus transmits: a first encrypted digital video bit stream (3) protected by first rights information in a PMT information and key information in ECM/EMM; and a second encrypted digital video bit stream (29) protected by ECM/EMM that stores Right Obj ect that contains second rights information and key information and rights object identification information. In a receiving apparatus, the first encrypted digital video bit stream (62) is readout on the basis of the first rights information in the PMT information and the key information contained in the ECM/EMM, while the second encrypted digital video bit stream (79) is read out on the basis of the second rights information and the keys contained in the ECM/EMM that stores the rights object identified by the rights object identification information.

## Description

### BACKGROUND OF THE INVENTION

The present invention relates to a transmitting apparatus, a receiving apparatus, and a transmitting and receiving apparatus used in the distribution and broadcasting of contents that contain digital audio video information.

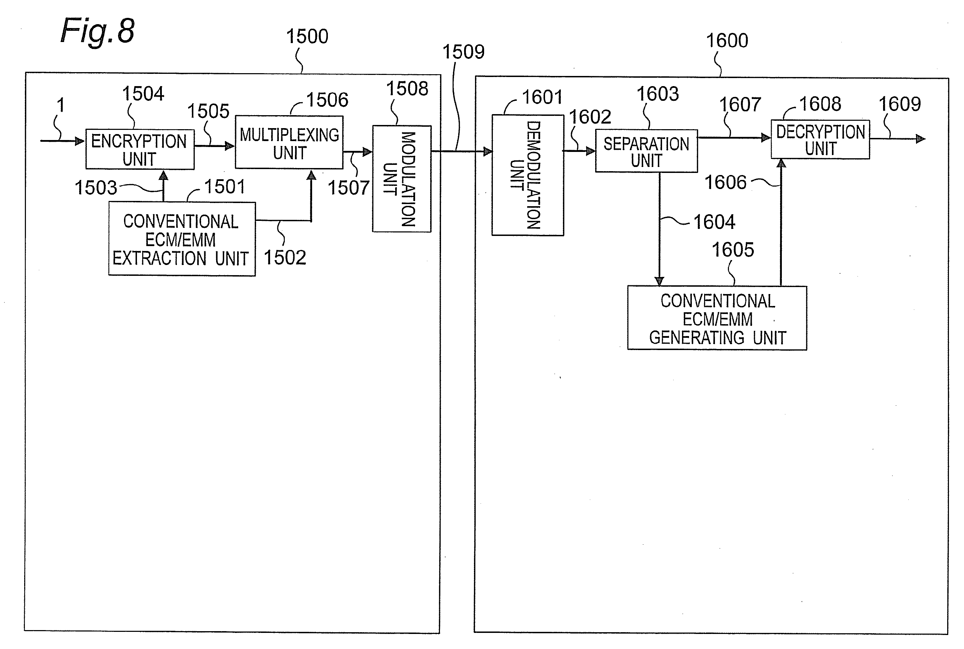

FIG. 8 is a block diagram showing a configuration of the transmitting and receiving apparatus that includes a transmitting apparatus and a receiving apparatus according to the conventional art. In the conventional transmitting apparatus 1500 shown in FIG. 8, a digital video bit stream 1 in accordance with MPEG-2 video (ISO/IEC13818-2) to be transmitted is inputted to an encryption unit 1504. To this encryption unit 1504, a key 1503 is inputted from an ECM/EMM generating unit 1501. The ECM/EMM generating unit 1501 according to the conventional art generates: ECM/EMM information 1502 consisting of an ECM (Entitlement Control Message) which is common information that contains restricted receiving information and an EMM (Entitlement Management Message) which is individuals information; and a key 1503. The encryption unit 1504 encrypts the digital video bit stream 1 by using the key 1503, and then outputs an encrypted digital video bit stream 1505 to a multiplexing unit 1506. The multiplexing unit 1506 multiplexes the encrypted digital video bit stream 1505 and the ECM/EMM information 1502 into an MPEG-2 TS (Transport Stream), and then outputs multiplexed information 1507. A modulation unit 1508 modulates the multiplexed information 1507 by OFDM (orthogonal frequency multiplexing modulation). Then, the transmitting apparatus 1500 transmits a generated modulated signal 1509 to a receiving apparatus 1600.

In the conventional receiving apparatus 1600, a demodulation unit 1601 demodulates the modulated signal 1509, and then outputs multiplexed information 1602. From the multiplexed information 1602, a separation unit 1603 outputs ECM/EMM information 1604 and an encrypted digital video bit stream 1607. An ECM/EMM extraction unit 1605 extracts key information 1606 from the separated ECM/EMM information 1604, and then provides it to a decryption unit 1608. The decryption unit 1608 decrypts the encrypted digital video bit stream 1607 by using the key information 1606 so as to generate an output digital video bit stream 1609.

In the conventional transmitting apparatus 1500 shown in FIG. 8, the digital video bit stream 1 is encrypted by the encryption unit 1504 by using the key 1503, so that an encrypted digital video bit stream 1505 is generated and then sent to the multiplexing unit 1506.

Further, in the conventional ECM/EMM generating unit 1501, ECM/EMM information 1502 is generated by combining: a common information ECM that contains information concerning the watching permission or non-permission of the program and contains the key 1503; and an individuals information EMM that contains information for solving the encryption of ECM and receiving contract information. This information is then sent to the multiplexing unit 1506. The encrypted digital video bit stream 1505 and the ECM/EMM information 1502 are multiplexed by the multiplexing unit 1506, and then inputted as multiplexed information 1507 to the modulation unit 1508. In the modulation unit 1508, OFDM modulation is performed so that a modulated signal 1509 is generated and then outputted.

On the other hand, in the conventional receiving apparatus 1600, a demodulation unit 1601 demodulates the modulated signal 1509, and then outputs multiplexed information 1602. From the demodulated multiplexed information 1602, the separation unit 1603 extracts demodulated ECM/EMM information 1604 and a demodulated encrypted digital video bit stream 1607. The ECM/EMM extraction unit 1605 extracts key information 1606 from the separated ECM/EMM information 1604, and then provides it to the decryption unit 1608. The decryption unit 1608 decrypts the encrypted digital video bit stream 1607 by using the key information 1606, and then outputs an output digital video bit stream 1609.

The scope of the conventional transmitting and receiving apparatus described in the above-mentioned background art is limited to a range of use in digital broadcasting based on ECM/EMM. Nevertheless, in OMA (Open Mobile Alliance) DRM (Digital Rights Management) which is expected to be employed in portable phone and IP (Internet Protocol) transmission, encrypted contents are in the form of a file together with rights object information that contains rights information and key information, in accordance with the ISO14496-12 file format. Thus, the rights object employed in OMA DRM cannot be transmitted by digital broadcasting described in the background art, and hence compatibility has not been realized between the two schemes.

### SUMMARY OF THE INVENTION

In view of the above-mentioned problem, an object of the present invention is to provide a transmitting apparatus, a receiving apparatus, and a transmitting and receiving apparatus in which compatibility is realized between the structure of protection based on ECM/EMM and the structure of protection based on Right Object.

In order to resolve the above-mentioned problem so as to achieve the obj ect, a transmitting apparatus according to a first aspect of the present invention comprises:
a first encryption unit for encrypting inputted digital information with a first key so as to generate first encrypted information;
a second key generating unit for generating a second key;
a second encryption unit for encrypting said inputted digital information with said second key so as to generate second encrypted information;
a first rights information generating unit for generating first rights information;
a second rights information generating unit for generating second rights information;
a Right Obj ect generating unit for generating Right Object that contains said second rights information and said second key;
a Right Object identification information generating unit for generating rights object identification information that identifies as being said rights object;
a first EMM generating unit for generating a third key, and then generating and encrypting a first EMM (Entitlement Management Message) that contains said generated third key, said rights object, said rights object identification information, and receiving apparatus identification information, so as to generate first EMM information;
a first ECM generating unit for generating a first ECM (Entitlement Control Message) that contains said first key, and then encrypting said generated first ECM with said third key so as to generate first ECM information; and
a multiplexing unit for multiplexing said first ECM information, said first EMM information, said first encrypted information, said second encrypted information, and said first rights information, and then outputting the multiplexed information.

A transmitting apparatus according to a second aspect of the present invention comprises:
a first encryption unit for encrypting inputted digital information with a first key so as to generate first encrypted information;
a second key generating unit for generating a second key;
a first rights information generating unit for generating first rights information;
a second encryption unit for encrypting said inputted digital information with said second key so as to generate second encrypted information;
a second rights information generating unit for generating second rights information;
a Right Obj ect generating unit for generating Right Object that contains said second rights information and said second key;
a Right Object identification information generating unit for generating rights object identification information that identifies as being said rights object;
a second EMM generating unit for generating a third key, then generating a second EMM from said generated third key and receiving apparatus identification information, and then encrypting it so as to generate second EMM information;
a second ECM generating unit for generating a second ECM that contains said first key, said rights object, and said rights object identification information, and then encrypting said generated second ECM with said third key so as to generate second ECM information; and
a multiplexing unit for multiplexing said second ECM information, said second EMM information, said first encrypted information, said second encrypted information, and said first rights information, and then outputting the multiplexed information.

A receiving apparatus according to a third aspect of the present invention comprises:
a separation unit for separating inputted multiplexed information, and then outputting encrypted first ECM information, encrypted first EMM information, first encrypted information, second encrypted information, and PMT information;
a first EMM decryption unit for extracting receiving apparatus identification information, Right Object, and a third key from said first EMM information;
a Right Object separation unit for extracting a second key and second rights information data from said rights object;
a second rights information read-out unit for extracting second rights information from said second rights information data;
a first ECM decryption unit for decrypting a first ECM from said first ECM information by using said third key, and then outputting a first key;
a first rights information extraction unit for extracting first rights information from said PMT information;
a first decryption unit for decrypting said first encrypted information on the basis of said first rights information by using said first key; and
a second decryption unit for decrypting said second encrypted information on the basis of said second rights information by using said second key.

A receiving apparatus according to a fourth aspect of the present invention comprises:
a separation unit for separating inputted multiplexed information, and then outputting encrypted second ECM information, encrypted second EMM information, first encrypted information, second encrypted information, and PMT information;
a second EMM decryption unit for extracting receiving apparatus identification information and a third key from said second EMM information;
a second ECM decryption unit for decrypting a second ECM from said second ECM information by using said third key, and then extracting Right Object and a first key;
a Right Object separation unit for extracting a second key and second rights information data from said rights object;
a second rights information read-out unit for extracting second rights information from said second rights information data;
a first rights information extraction unit for extracting first rights information from said PMT information;
a first decryption unit for decrypting said first encrypted information on the basis of said first rights information by using said first key; and
a second decryption unit for decrypting said second encrypted information on the basis of said second rights information by using said second key.

A transmitting and receiving apparatus according to a fifth aspect of the present invention is a transmitting and receiving apparatus comprising a transmitting apparatus and a receiving apparatus, wherein
said transmitting apparatus includes:
a first encryption unit for encrypting inputted digital information with a first key so as to generate first encrypted information;
a second key generating unit for generating a second key;
a second encryption unit for encrypting said inputted digital information with said second key so as to generate second encrypted information;
a first rights information generating unit for generating first rights information;
a second rights information generating unit for generating second rights information;
a Right Object generating unit for generating Right Object that contains said second rights information and said second key;
a Right Object identification information generating unit for generating rights object identification information that identifies as being said rights object;
a first EMM generating unit for generating a third key, and then generating and encrypting a first EMM (Entitlement Management Message) that contains said generated third key, said rights object, said rights object identification information, and receiving apparatus identification information, so as to generate first EMM information;
a first ECM generating unit for generating a first ECM (Entitlement Control Message) that contains said first key, and then encrypting said generated first ECM with said third key so as to generate first ECM information; and
a multiplexing unit for multiplexing said first ECM information, said first EMM information, said first encrypted information, said second encrypted information, and said first rights information, and then outputting the multiplexed information, and wherein
said receiving apparatus includes:
   a separation unit for separating inputted multiplexed information, and then outputting encrypted first ECM information, encrypted first EMM information, first encrypted information, second encrypted information, and PMT information;
   a first EMM decryption unit for extracting receiving apparatus identification information, Right Object, and a third key from said first EMM information;
   a Right Object separation unit for extracting a second key and second rights information data from said rights object;
   a second rights information read-out unit for extracting second rights information from said second rights information data;
   a first ECM decryption unit for decrypting a first ECM from said first ECM information by using said third key, and then outputting a first key;
   a first rights information extraction unit for extracting first rights information from said PMT information;
   a first decryption unit for decrypting said first encrypted information on the basis of said first rights information by using said first key; and
   a second decryption unit for decrypting said second encrypted information on the basis of said second rights information by using said second key.

A transmitting and receiving apparatus according to a sixth aspect of the present invention is a transmitting and receiving apparatus comprising a transmitting apparatus and a receiving apparatus, wherein
said transmitting apparatus includes:
a first encryption unit for encrypting inputted digital information with a first key so as to generate first encrypted information;
a second key generating unit for generating a second key;
a first rights information generating unit for generating first rights information;
a second encryption unit for encrypting said inputted digital information with said second key so as to generate second encrypted information;
a second rights information generating unit for generating second rights information;
a Right Obj ect generating unit for generating Right Object that contains said second rights information and said second key;
a Right Object identification information generating unit for generating rights object identification information that identifies as being said rights object;
a second EMM generating unit for generating a third key, then generating a second EMM from said generated third key and receiving apparatus identification information, and then encrypting it so as to generate second EMM information;
a second ECM generating unit for generating a second ECM that contains said first key, said rights obj ect, and said rights object identification information, and then encrypting said generated second ECM with said third key so as to generate second ECM information; and
a multiplexing unit for multiplexing said second ECM information, said second EMM information, said first encrypted information, said second encrypted information, and said first rights information, and then outputting the multiplexed information, and wherein
said receiving apparatus includes:
   a separation unit for separating inputted multiplexed information, and then outputting encrypted second ECM information, encrypted second EMM information, first encrypted information, second encrypted information, and PMT information;
   a second EMM decryption unit for extracting receiving apparatus identification information and a third key from said second EMM information;
   a second ECM decryption unit for decrypting a second ECM from said second ECM information by using said third key, and then extracting Right Object and a first key;
   a Right Object separation unit for extracting a second key and second rights information data from said rights object;
   a second rights information read-out unit for extracting second rights information from said second rights information data;
   a first rights information extraction unit for extracting first rights information from said PMT information;
   a first decryptionunit for decrypting said first encrypted information on the basis of said first rights information by using said first key; and
   a second decryption unit for decrypting said second encrypted information on the basis of said second rights information by using said second key.

A transmitting apparatus according to a seventh aspect of the present invention comprises:
a first encryption unit for encrypting inputted digital information with a first key so as to generate first encrypted information;
a second key generating unit for generating a second key;
a second rights information generating unit for generating second rights information;
a Right Obj ect generating unit for generating Right Obj ect that contains said second rights information and said second key;
a Right Object identification information generating unit for generating rights object identification information that identifies as being said rights object;
a third EMM generating unit for generating and encrypting a third EMM (Entitlement Management Message) that contains said rights object, said rights object identification information, and receiving apparatus identification information, so as to generate third EMM information;
a third ECM generating unit for generating a third ECM (Entitlement Control Message) that contains said first key, and then encrypting said generated third ECM with said second key so as to generate third ECM information; and
a multiplexing unit for multiplexing said third ECM information, said third EMM information, and said first encrypted information, and then outputting multiplexed information.

A transmitting apparatus according to an eighth aspect of the present invention comprises:
a first encryption unit for encrypting inputted digital information with a first key so as to generate first encrypted information;
a second key generating unit for generating a second key;
a second rights information generating unit for generating second rights information;
a Right Obj ect generating unit for generating Right Obj ect that contains said second rights information and said second key;
a fourth EMM generating unit for generating and encrypting a fourth EMM (Entitlement Management Message) that contains receiving apparatus identification information, so as to generate fourth EMM information;
a third ECM generating unit for generating a third ECM (Entitlement Control Message) that contains said first key, and then encrypting said generated third ECM with said second key so as to generate third ECM information;
a multiplexing unit for multiplexing said third ECM information, said fourth EMM information, and said first encrypted information, and then outputting multiplexed information;
a first authentication unit for authenticating a destination to which said rights object is to be transmitted; and
a first communication unit for transmitting and receiving authentication information of said first authentication unit, and transmitting said rights object.

A transmitting apparatus according to a ninth aspect of the present invention comprises:
a first encryption unit for encrypting inputted digital information with a first key so as to generate first encrypted information;
a second key generating unit for generating a second key;
a first rights information generating unit for generating first rights information;
a second rights information generating unit for generating second rights information;
a Right Obj ect generating unit for generating Right Obj ect that contains said second rights information and said second key;
a fifth EMM generating unit for generating and encrypting a fifth EMM (Entitlement Management Message) that contains receiving apparatus identification information and a second key, so as to generate fifth EMM information;
a third ECM generating unit for generating a third ECM (Entitlement Control Message) that contains said second key, and then encrypting said generated third ECM with said second key so as to generate third ECM information;
a multiplexing unit for multiplexing said third ECM information, said fifth EMM information, said first encrypted information, and said first rights information, and then outputting the multiplexed information;
a first authentication unit for authenticating a destination to which said rights object is to be transmitted; and
a first communication unit for transmitting and receiving authentication information of said first authentication unit, and transmitting said rights object.

A receiving apparatus according to a tenth aspect of the present invention comprises:
a separation unit for separating inputted multiplexed information, and then out putting encrypted third ECM information, encrypted third EMM information, and first encrypted information;
a third EMM decryption unit for extracting receiving apparatus identification information and Right Object from said third EMM information;
a Right Object separation unit for extracting a second key and second rights information data from said rights object;
a second rights information read-out unit for extracting second rights information from said second rights information data;
a third ECM decryption unit for decrypting a third ECM from said third ECM information by using said second key, and then outputting a first key; and
a thirddecryptionunit for decrypting said first encrypted information on the basis of said second rights information by using said first key.

A receiving apparatus according to an eleventh aspect of the present invention comprises:
a separation unit for separating inputted multiplexed information, and then outputting encrypted fourth ECM information, encrypted fourth EMM information, and first encrypted information;
a fourth EMM decryption unit for extracting receiving apparatus identification information from said fourth EMM information;
a second authentication unit for authenticating a destination by which Right Object is to be received;
a second communication unit for transmitting and receiving authentication information of said second authentication unit, and receiving said rights object;
a Right Object separation unit for extracting a second key and second rights information data from said rights object;
a second rights information read-out unit for extracting second rights information from said second rights information data;
a fourth ECM decryption unit for decrypting a fourth ECM from said fourth ECM information by using said second key, and then outputting a first key; and
a third decryption unit for decrypting said first encrypted information on the basis of said second rights information by using said first key.

A receiving apparatus according to a twelfth aspect of the present invention comprises:
a separation unit for separating inputted multiplexed information, and then outputting encrypted thirdECM information, encrypted third EMM information, and first encrypted information;
a third EMM decryption unit for extracting receiving apparatus identification information and Right Object from said third EMM information;
a Right Object separation unit for extracting a second key and second rights information data from said rights object;
a second rights information read-out unit for extracting second rights information from said second rights information data;
a third ECM decryption unit for decrypting a third ECM from said third ECM information by using said second key, and then outputting a first key;
a third decryptionunit for decrypting said first encrypted information on the basis of said second rights information by using said first key; and
a first output unit for outputting said inputted multiplexed information and said rights object.

A receiving apparatus according to a thirteenth aspect of the present invention comprises:
a separation unit for separating inputted multiplexed information, and then outputting encrypted third ECM information, encrypted fifth EMM information, first encrypted information, and PMT information;
a fifth EMM decryption unit for extracting receiving apparatus identification information and a second key from said fifth EMM information;
a first rights information extraction unit for extracting first rights information from said PMT information;
a third ECM decryption unit for decrypting a third ECM from said third ECM information by using said second key, and then outputting a first key;
a first decryptionunit for decrypting said first encrypted information on the basis of said first rights information by using said first key; and
a second output unit for outputting said inputted multiplexed information.

A transmitting and receiving apparatus according to a fourteenth aspect of the present invention is a transmitting and receiving apparatus comprising a transmitting apparatus, a receiving apparatus, and an external apparatus, wherein
said transmitting apparatus includes:
a first encryption unit for encrypting inputted digital information with a first key so as to generate first encrypted information;
a second key generating unit for generating a second key;
a first rights information generating unit for generating first rights information;
a second rights information generating unit for generating second rights information;
a Right Obj ect generating unit for generating Right Obj ect that contains said second rights information and said second key;
a fifth EMM generating unit for generating and encrypting a fifth EMM (Entitlement Management Message) that contains receiving apparatus identification information and a second key, so as to generate fifth EMM information;
a third ECM generating unit for generating a third ECM (Entitlement Control Message) that contains said second key, and then encrypting said generated third ECM with said second key so as to generate third ECM information;
a multiplexing unit for multiplexing said third ECM information, said fifth EMM information, said first encrypted information, and said first rights information, and then outputting the multiplexed information;
a first authentication unit for authenticating a destination to which said rights object is to be transmitted; and
a first communication unit for transmitting and receiving authentication information of said first authentication unit, and transmitting said rights object, wherein
said receiving apparatus includes:
   a separation unit for separating inputted multiplexed information, and then outputting encrypted third ECM information, encrypted fifth EMM information, first encrypted information, and PMT information;
   a fourth EMM decryption unit for extracting receiving apparatus identification information and a second key from said fifth EMM information;
   a first rights information extraction unit for extracting first rights information from said PMT information;
   a fifth ECM decryption unit for decrypting a fifth ECM from said fifth ECM information by using said second key, and then outputting a first key;
   a first decryption unit for decrypting said first encrypted information on the basis of said first rights information by using said first key; and
   a second output unit for outputting said inputted multiplexed information, and wherein
said external apparatus includes:
   a third authentication unit for authenticating a destination by which Right Object is to be received;
   a third communication unit for transmitting and receiving authentication information of said third authentication unit, and receiving said rights object;
   a Right Object separation unit for extracting a second key and second rights information data from said rights object;
   a second rights information read-out unit for extracting second rights information from said second rights information data;
   a third ECM decryption unit for decrypting a third ECM from said third ECM information by using said second key, and then outputting a first key; and
   a second decryption unit for decrypting said first encrypted information on the basis of said second rights information by using said first key.

In a transmitting apparatus, a receiving apparatus, and a transmitting and receiving apparatus according to the present invention, a remarkable effect is obtained that compatibility can be realized between the structure of protection based on ECM/EMM and the structure of protection based on Right Object used in OMA DRM, which has not been obtained in the convention art.

While the novel features of the invention are set forth particularly in the appended claims, the invention, both as to organization and content, will be better understood and appreciated, along with other obj ects and features thereof, from the following detailed description taken in conjunction with the drawings.

### BRIEF DESCRIPTION OF THE DRAWINGS

FIG. 1 is a block diagram showing a configuration of a transmitting and receiving apparatus that includes a transmitting apparatus and a receiving apparatus according to Embodiment 1 of the present invention.
FIG. 2 is a block diagram showing a configuration of a transmitting and receiving apparatus that includes a transmitting apparatus and a receiving apparatus according to Embodiment 2 of the present invention.
FIG. 3 is a block diagram showing a configuration of a transmitting and receiving apparatus that includes a transmitting apparatus and a receiving apparatus according to Embodiment 3 of the present invention.
FIG. 4 is a block diagram showing a configuration of a transmitting and receiving apparatus that includes a transmitting apparatus and a receiving apparatus according to Embodiment 4 of the present invention.
FIG. 5 is a block diagram showing a configuration of a transmitting and receiving apparatus that includes a transmitting apparatus, a receiving apparatus, and an external apparatus according to Embodiment 5 of the present invention.
FIG. 6 is a block diagram showing a configuration of a transmitting and receiving apparatus that includes a transmitting apparatus, a receiving apparatus, and an external apparatus according to Embodiment 6 of the present invention.
FIG. 7 is a block diagram showing a configuration of an external apparatus according to Embodiment 6.
FIG. 8 is a block diagram showing a configuration of a conventional transmitting and receiving apparatus.

It will be recognized that some or all of the Figures are schematic representations for purposes of illustration and do not necessarily depict the actual relative sizes or locations of the elements shown.

### DETAILED DESCRIPTION OF THE PREFERRED EMBODIMENTS

Preferred embodiments of a transmitting apparatus, a receiving apparatus, and a transmitting and receiving apparatus according to the present invention are described below with reference to the accompanying drawings.

### (Embodiment 1)

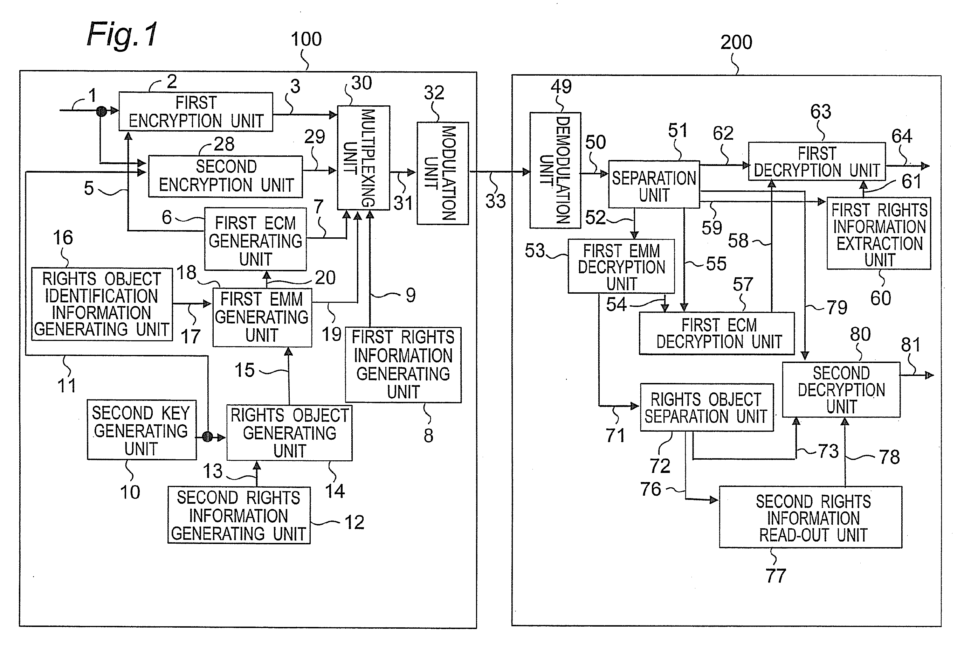

FIG. 1 is a block diagram showing a configuration of a transmitting and receiving apparatus that includes a transmitting apparatus 100 and a receiving apparatus 200 according to Embodiment 1 of the present invention.

The transmitting apparatus 100 according to Embodiment 1 shown in FIG. 1 is, for example, a video server operated by an operator. A digital video bit stream 1 serving as inputted digital information is encrypted using a first key 5 by a first encryption unit 2, so that a first encrypted digital video bit stream 3 serving as first encrypted information is generated. The generated first encrypted digital video bit stream 3 is sent to a multiplexing unit 30. Further, the digital video bit stream 1 is encrypted by a second encryption unit 28 by using a second key 11, so that a second encrypted digital video bit stream 29 serving as second encrypted information is generated. Then, the generated second encrypted digital video bit stream 29 is sent to the multiplexing unit 30.

The transmitting apparatus according to Embodiment 1 further comprises: a first ECM generating unit 6 for generating a first key 5 and encrypted first ECM information 7; a first rights information generating unit 8 for generating first rights information 9; a second key generating unit 10 for generating a second key 11; a second rights information generating unit 12 for generating second rights information 13; a Right Object generating unit 14 for generating Right Object 15; a Right Obj ect identification information generating unit 16 for generating rights object identification information 17; a first EMM generating unit 18 for generating encrypted first EMM information 19 that contains the rights object 15 and the rights object identification information 17, and generating a third key 20; and a modulation unit 32 for modulating the first multiplexed information 31 from the multiplexing unit 30, by a modulation scheme of OFDM (Orthogonal Frequency Division Multiplexing) .

On the other hand, the receiving apparatus 200 is a set top box on the consumer side. A demodulation unit 49 demodulates a received first modulated signal 33, and then provides first multiplexed information 50 to a separation unit 51. From the first multiplexed information 50, the separation unit 51 separates first EMM information 52, first ECM information 55, PMT (ProgramMap Table) information 59, a first encrypted digital video bit stream 62 serving as first encrypted information, and a second encrypted digital video bit stream 79 serving as second encrypted information. Further, the receiving apparatus 200 includes: a first EMM decryption unit 53 into which the first EMM information 52 is inputted; a first ECM decryption unit 57 to which a third key 54 extracted by the first EMM decryption unit 53 is provided and which extracts a first key 58; a Right Object separation unit 72 into which Right Object 71 from the first EMM decryption unit 53 is inputted and which separates a second key 73 and second rights information data 76; a second rights information read-out unit 77 for extracting second rights information 78 from the second rights information data 76; a second decryption unit 80 for decrypting a second encrypted digital video bit stream 79 on the basis of the second key 73 and the second rights information 78, and then outputting a second digital video bit stream 81; a first rights information extraction unit 60 for extracting first rights information 61 from the PMT information 59; and a first decryption unit 63 for decrypting the separated first encrypteddigital video bit stream 62 on the basis of the first key 58 and the first rights information 61, and then outputting a first digital video bit stream 64.

In the transmitting apparatus 100 shown in FIG. 1, a digital video bit stream 1 serving as inputted digital information encrypted by the first encryption unit 2 by using the first key 5 generated by the first ECM generating unit 6, and then outputted as a first encrypted digital video bit stream 3.

The structure of the first ECM generated by the first ECM generating unit 6 is shown in Table 1. As shown in Table 1, in the first ECM, after an ECM section header, an ECM is stored. The ECM consists of a fixed part and a variable part. In the fixed part, after a protocol number and business entity identification information, the first key 5 is stored.

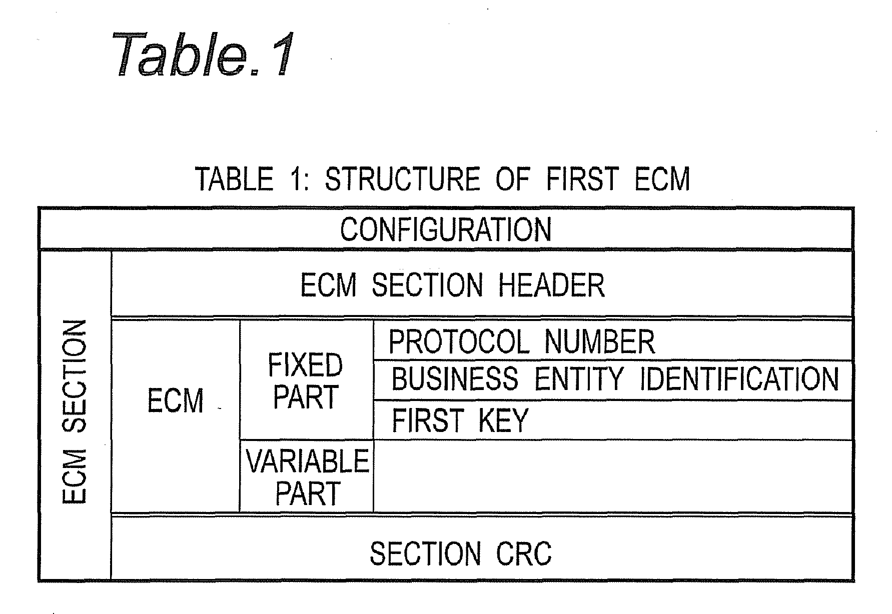

The first ECM is encrypted with the third key 20 generated by the first EMM generating unit 18, so that first ECM information 7 is generated. Then, it is sent to the multiplexing unit 30.

The first rights information generating unit 8 generates first rights information 9, and then sends it to the multiplexing unit 30. The multiplexing unit 30 stores the first rights information 9 into the PMT (Program Map Table) information, and then multiplexes it. The first rights information 9 is copy control information CCI (Copy Control Information) with which copy control is performed in 2 bits and which contains information of copy unrestricted, one-generation copy, no more copy, or copy inhibited. In this case, the first rights information 9 is multiplexed into the PMT, and hence is in a clear text form and is not protected.

On the other hand, the digital video bit stream 1 is encrypted by the second encryption unit 28 by using the second key 11 generated by the second key generating unit 10, and then outputted as a second encrypted digital video bit stream 29. The second key 11 is sent to the rights object generating unit 14. The second rights information generating unit 12 generates second rights information 13, and then sends it to the rights object generating unit 14. It is assumed that the second rights information 13 is described in the XML (extensible Markup Language). The rights object generating unit 14 generates rights object information 15 that contains the second key 11 and the second rights information 13, and then sends it to the first EMM generating unit 18.

Rights object identification information 17 that indicates as being Right Object is generated by the rights object identification information generating unit 16, and then provided to the first EMM generating unit 18. The first EMM generating unit 18 encrypts the first EMM that contains the rights object identification information 17 and the rights object 15 so as to generate first EMM information 19, and then sends it to the multiplexing unit 30. The second rights information 13 is encrypted as a part of the first EMM, and hence is protected.

Table 2 shows the structure of the first EMM. As shown in Table 2, in the first EMM, after the EMM section, the data of EMM1 to EMMn is stored. The EMM1 is divided into a fixed part and a variable part. The fixed part stores: a card ID of the receiving apparatus 200, which serves as receiving contract information (receiving apparatus identification information) ; the byte length of related information; a protocol number; a business entity identification information which serves as a code for identifying a business entity that operates restricted receiving broadcasting; an update number serving as a number to be increased at the time of updating; and expiration date information. In the variable part, a descriptor "EncKey descriptor" is described, and a third key is stored. Further, a descriptor "RO descriptor" corresponding to the rights object identification information 17 is described. After that, Right Object that contains the second key and the second rights information is described. In the receiving apparatus 200, when the descriptor "RO descriptor" is described in the variable part, the presence of the above-mentioned rights obj ect is recognized. In the fixed parts of the EMM2 to EMMn, similar data to the EMM1 is stored. In the variable parts, blank data is stored in the present Embodiment 1.

The CRC (Cyclic Redundancy Check) in the structure of the first EMM is a check code.

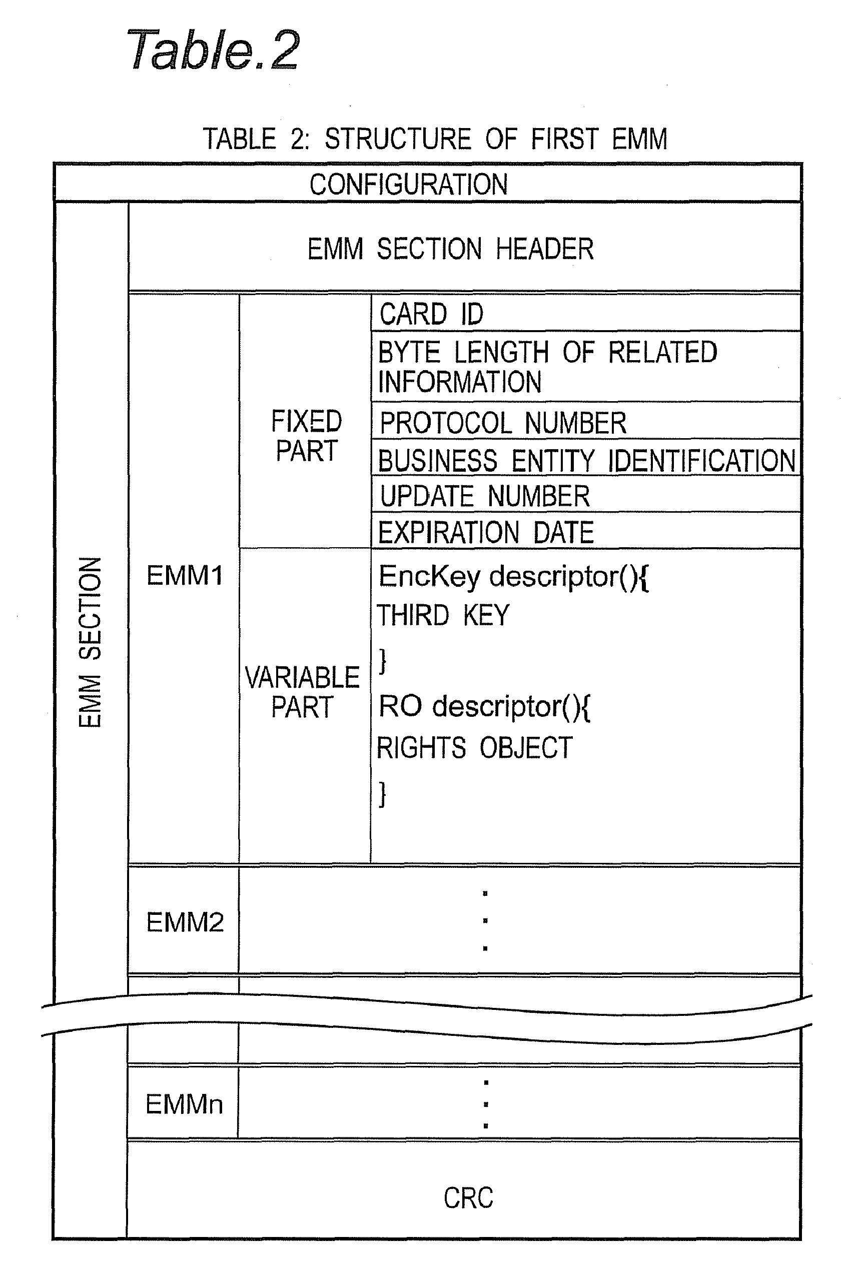

The multiplexing unit 30 multiplexes the first encrypted digital video bit stream 3, the second encrypted digital video bit stream 29, the first ECM information 7, the first EMM information 19, and the first rights information 9, and then provides this first multiplexed information 31 to the modulation unit 32. The modulation unit 32 performs orthogonal frequency multiplexing modulation on the first multiplexed information 31, and then outputs a first modulated signal 33 to the receiving apparatus 200.

On the other hand, in the receiving apparatus 200, the received first modulated signal 33 is demodulated by the demodulation unit 49, so that the first multiplexed information 50 is outputted. From the demodulated first multiplexed information 50, the separation unit 51 separates the first EMM information 52, the first ECM information 55, the PMT information 59, the first encrypted digital video bit stream 62, and the second encrypted digital video bit stream 79. The first rights information extraction unit 60 extracts the first rights information 61 from the PMT information 59, and then provides it to the first decryption unit 63.

The first EMM information 52 is provided to the first EMM decryption unit 53. The first EMM decryption unit 53 extracts: the card ID (receiving apparatus identification information) of the receiving apparatus 200; the byte length of related information; a protocol number; a business entity identification information which serves as a code for identifying a business entity that operates restricted receiving broadcasting; an update number serving as a number to be increased at the time of updating; and expiration date information, which are shown in Table 2. Then, the first EMM decryption unit 53 detects the descriptor "EncKey descriptor" in the variable part in the structure of the first EMM, then extracts the third key 54, and then provides it to the first ECM decryption unit 57. The first ECM decryption unit 57 decrypts the encrypted first ECM information 55 by using the third key 54, and then outputs the first key 58.

The first decryption unit 63 decrypts the first encrypted digital video bit stream 62 by using the first key 58 and the first rights information 61, and then outputs the result as the first digital video bit stream 64.

Further, the first EMM decryption unit 53 detects the descriptor "RO descriptor" in the variable part, then extracts the rights object 71, and then provides it to the rights object separation unit 72. In this case, since a descriptor format is employed, even when the "RO descriptor" is not present, the first EMM decryption unit 53 processes solely the "EncKey descriptor". Thus, erroneous operation does not occur.

The rights object separation unit 72 extracts the second key 73 and then provides it to the second decryption unit 80, and extracts the second rights information data 76 and then provides it to the second rights information read-out unit 77. The second rights information read-out unit 77 reads out and extracts the second rights information 78 from the second rights information data 76 expressed in the XML, and then provides it to the second decryption unit 80.

The second decryption unit 80 decrypts the second encrypted digital video bit stream 79 by using the second key 73 and the second rights information 78, and then outputs the result as the second digital video bit stream 81.

As described above, the receiving apparatus 200 can process both of: the read-out of the first encrypted digital video bit stream 62 performed on the basis of the first rights information 61 stored in the PMT and the key information contained in the ECM/EMM; and the read-out of the second encrypted digital video bit stream 79 performed on the basis of the rights information and the keys contained in the ECM/EMM that contains the rights object 71 identified by the rights object identification information. Thus, in the transmitting and receiving apparatus according to Embodiment 1 of the present invention, compatibility between contents protection based on the framework of ECM/EMM and contents protection using Right Object like in OMA DRM can be realized as a protection structure in an individual receiving apparatus.

### (Embodiment 2)

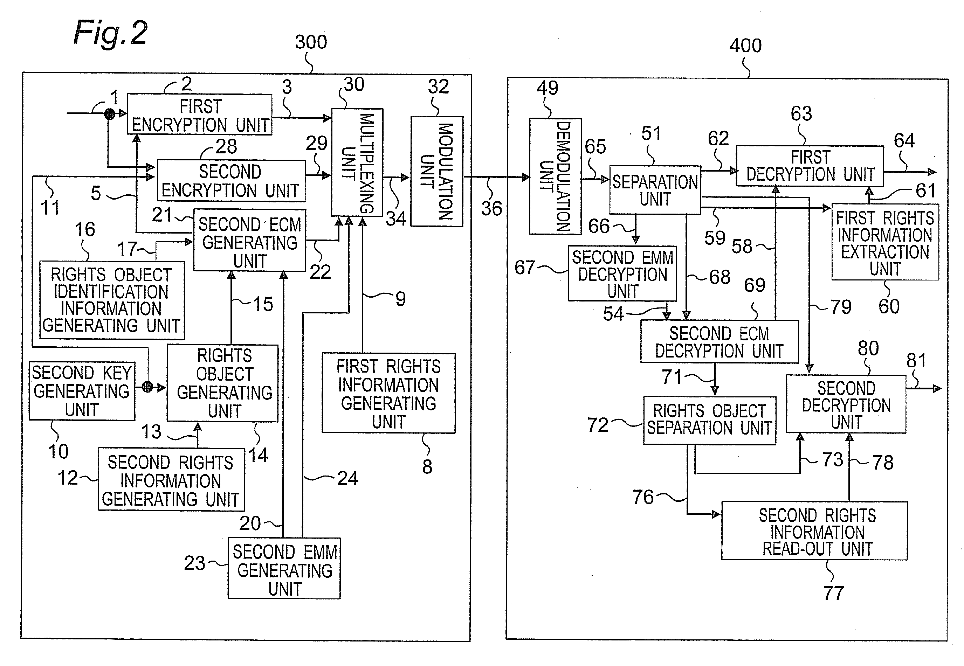

FIG. 2 is a block diagram showing a configuration of a transmitting and receiving apparatus that includes a transmitting apparatus 300 and a receiving apparatus 400 according to Embodiment 2 of the present invention. In FIG. 2, components having the same function and configuration as those of the transmitting and receiving apparatus according to Embodiment 1 described above are designated by like reference numerals. Then, for their description, the description of Embodiment 1 should be referred to. Major differences of the transmitting and receiving apparatus according to Embodiment 2 from the transmitting and receiving apparatus according to Embodiment 1 are the configurations of the second ECM generating unit 21 and the second EMM generating unit 23 in the transmitting apparatus 300 and the second EMM decryption unit 67 and the second ECM decryption unit 69 in the receiving apparatus 400.

In the transmitting apparatus 300 in the transmitting and receiving apparatus according to Embodiment 2, the second EMM generating unit 23 generates a third key 20 and an encrypted second EMM information 24, then provides the third key 20 to the second ECM generating unit 21, and then provides the second EMM information 24 to the multiplexing unit 30. The second ECM generating unit 21 receives the rights object 15, the rights object identification information 17, and the third key 20, and then generates a first key 5 and an encrypted second ECM information 22. The multiplexing unit 30 generates a second multiplexed information 34, and then provides it to the modulation unit 32. In the modulation unit 32, the second multiplexed information 34 is modulated so that a second modulated signal 36 is generated and then transmitted to the receiving apparatus 400.

On the other hand, in the receiving apparatus 400 in the transmitting and receiving apparatus according to Embodiment 2, the received second modulated signal 36 is demodulated by the demodulation unit 49. Then, the demodulated second multiplexed information 65 is inputted to the separation unit 51. From the demodulated second multiplexed information 65, the separation unit 51 extracts and separates the PMT (Program Map Table) information 59, the first encrypted digital video bit stream 62, and the second encrypted digital video bit stream 79, as well as the second EMM information 66 and the second ECM information 68. The second EMM information 66 separated by the separation unit 51 is sent to the second EMM decryption unit 67, so that the third key 54 is extracted. The third key 54 extracted by the second EMM decryption unit 67 is sent together with the second ECM information 68 to the second ECM decryption unit 69, so that the first key 58 and the rights object 71 are extracted.

In the transmitting apparatus 300 shown in FIG. 2, a digital video bit stream 1 serving as inputted digital information encrypted by the first encryption unit 2 by using the first key 5 generated by the second ECM generating unit 21, and then outputted as a first encrypted digital video bit stream 3.

The second key 11 is generated by the second key generating unit 10, and then sent to the rights object generating unit 14 and the second encryption unit 28. The second rights information generating unit 12 generates second rights information 13, and then provides it to the rights object generating unit 14. The rights object generating unit 14 generates Right Object 15 that contains the second key 11 and the second rights information 13, and then provides it to the second ECM generating unit 21.

The rights object identification information generating unit 16 generates rights object identification information 17 that indicates as being Right Object 15. Then, this rights obj ect identification information 17 is provided to the second ECM generating unit 21.

Table 3 shows the structure of the second ECM generated by the second ECM generating unit 21. As shown in Table 3, in the second ECM, after an ECM section header, an ECM is stored. The ECM consists of a fixed part and a variable part. In the fixed part, after a protocol number and business entity identification information, the first key 5 is stored.

In the variable part, a "RO descriptor" corresponding to the rights object identification information 17 is described. After that, the rights object 15 that contains the second key 11 and the second rights information 13 is described. In the receiving apparatus 400, when the "RO descriptor" is described in the variable part, the presence of the above-mentioned rights object is recognized. The rights object 15 is stored in the ECM serving as common information. That is, in contrast to Embodiment 1, the rights object 15 is stored as common information.

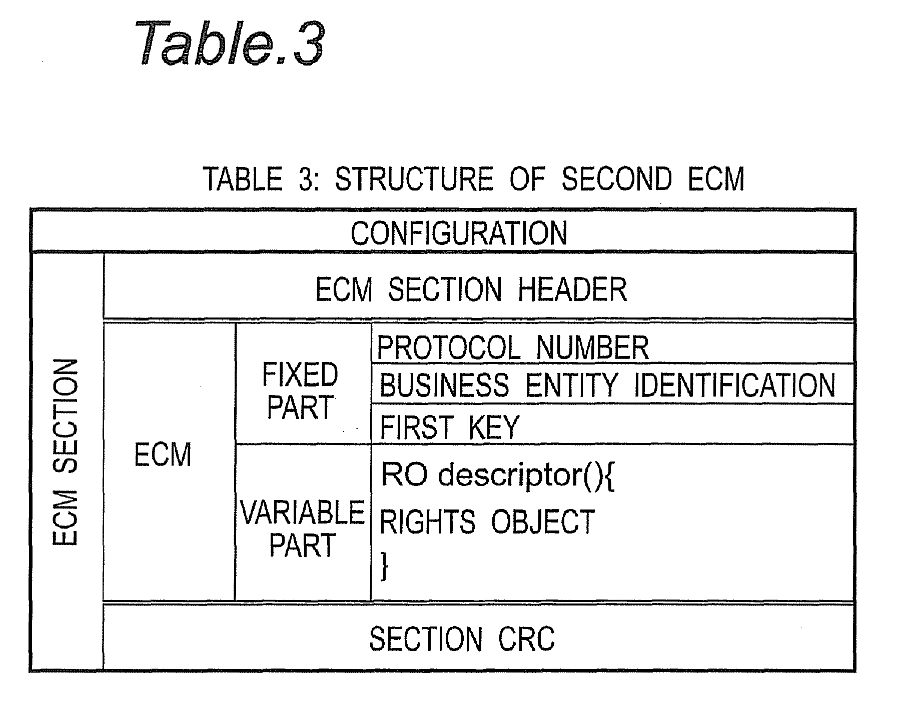

Using the third key 20 generated by the second EMM generating unit 23, the second ECM generating unit 21 encrypts the second ECM that contains the rights object 15 and the rights object identification information 17, so as to generate second ECM information 22. The generated second ECM information 22 is sent to the multiplexing unit 30.

Further, the second key 11 generated by the second key generating unit 10 is sent to the second encryption unit 28, and then used in the encryption of the digital video bit stream 1. The digital video bit stream 1 encrypted by the second encryption unit 28 is sent as the second encrypted digital video bit stream 29 to the multiplexing unit 30.

Table 4 shows the structure of the second EMM. As shown in Table 4, in the second EMM, after the EMM section, the data of EMM1 to EMMn is stored. The EMM1 is divided into a fixed part and a variable part. The fixed part stores: a card ID of the receiving apparatus 400, which serves as receiving contract information (receiving apparatus identification information) ; the byte length of related information; a protocol number; a business entity identification information which serves as a code for identifying a business entity that operates restricted receiving broadcasting; an update number serving as a number to be increased at the time of updating of the individuals information; and expiration date information for the individuals information. In the variable part, "EncKey descriptor" is described. After that, the third key is stored. In the fixed parts of the EMM2 to EMMn, similar data to the EMM1 is stored. In the variable parts, blank data is stored in the present Embodiment 2.

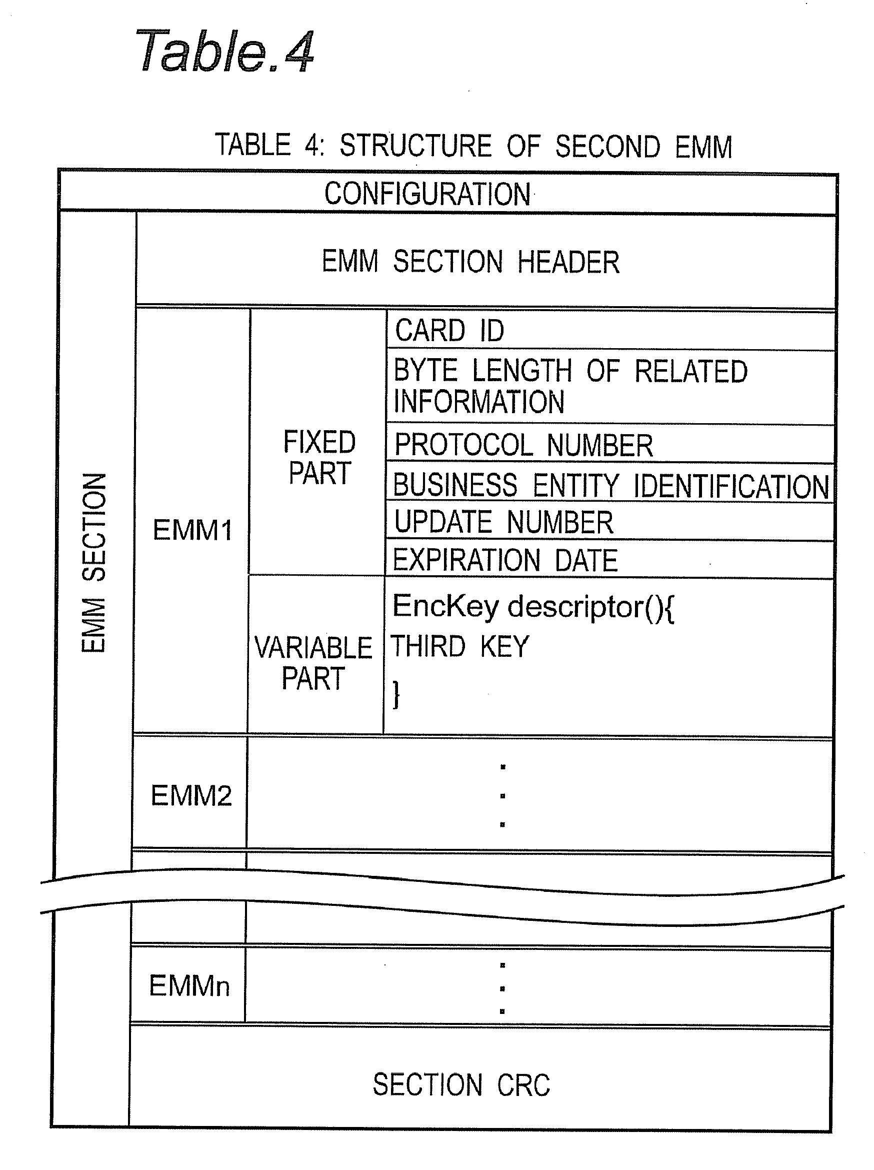

The first rights information generating unit 8 generates first rights information 9, and then provides it to the multiplexing unit 30. The multiplexing unit 30 multiplexes the first rights information 9 to the PMT. Here, the first rights information 9 is copy control information CCI (Copy Control Information) with which copy control is performed in 2 bits and which contains information of copy unrestricted, one-generation copy, no more copy, or copy inhibited.

The multiplexing unit 30 multiplexes the first encrypted digital video bit stream 3, the second encrypted digital video bit stream 29, the second ECM information 22, the second EMM information 24, and the first rights information 9, so as to generate second multiplexed information 34, and then provides the generated second multiplexed information 34 to the modulation unit 32. The modulation unit 32 outputs a secondmodulated signal 36 obtained by modulating the second multiplexed information 34 by a modulation scheme of OFDM (orthogonal frequency division multiplexing).

On the other hand, in the receiving apparatus 400, the received second modulated signal 36 is demodulated by the demodulation unit 49, so that second multiplexed information 65 is generated. The generated second multiplexed information 65 is inputted to the separation unit 51. From the demodulated second multiplexed information 65, the separation unit 51 separates respectively the first encrypted digital video bit stream 62, the second encrypted digital video bit stream 79, the PMT information 59, the second EMM information 66, and the second ECM information 68. The second EMM information 66 is sent to the second EMM decryption unit 67.

The second EMM decryption unit 67 extracts: the card ID (receiving apparatus identification information) of the receiving apparatus 400; the byte length of related information; a protocol number; a business entity identification information which serves as a code for identifying a business entity that operates restricted receiving broadcasting; an update number serving as a number to be increased at the time of updating; and expiration date information, which are shown in Table 4. Then, the second EMM decryption unit 67 detects the "EncKey descriptor" in the variable part in the structure of the second EMM, then extracts the third key 54, and then sends it to the second ECM decryption unit 69.

The second ECM decryption unit 69 decrypts the encrypted second ECM information 68 by using the third key 54 so as to obtain the second ECM, and then sends the first key 58 to the first decryption unit 63.

The second ECM decryption unit 69 detects the "RO descriptor" in the variable part in the structure of the second ECM shown in Table 3, then extracts the rights object 71, and then provides it to the rights object separation unit 72.

The rights object separation unit 72 extracts the third key 73 and then sends it to the second decryption unit 80, and extracts the second rights information data 76 and then sends it to the second rights information read-out unit 77. The second rights information read-out unit 77 extracts the second rights information 78, and then provides it to the second decryption unit 80.

The second decryption unit 80 decrypts the second encrypted digital video bit stream 79 by using the third key 73 and the second rights information 78, and then outputs the result as the second digital video bit stream 81.

As described above, the receiving apparatus 400 canprocess both of: the read-out of the first encrypted digital video bit stream 62 performed on the basis of the first rights information 61 stored in the PMT and the key information contained in the ECM/EMM; and the read-out of the second encrypted digital video bit stream 79 performed on the basis of the rights information and the keys contained in the ECM/EMM that contains the rights object 71 identified by the rights object identification information. Thus, in the transmitting and receiving apparatus according to Embodiment 2 of the present invention, compatibility between contents protection based on the framework of ECM/EMM and contents protection using Right Object like in OMA DRM can be realized as a common structure for services.

Here, in Embodiment 1 and Embodiment 2 described above, the rights object itself may be already encrypted one. Even in this case, obviously, a similar effect is obtained.

Further, Embodiment 1 and Embodiment 2 have been described above for the case of a digital video bit stream. However, obviously, a similar effect is obtained even in the case of a digital audio bit stream.

Further, Embodiment 1 and Embodiment 2 have been described for the case that a first digital video bit stream and a second digital video bit stream are present simultaneously. However, obviously, a similar effect is obtained even in the case that a second digital video bit stream is solely present.

### (Embodiment 3)

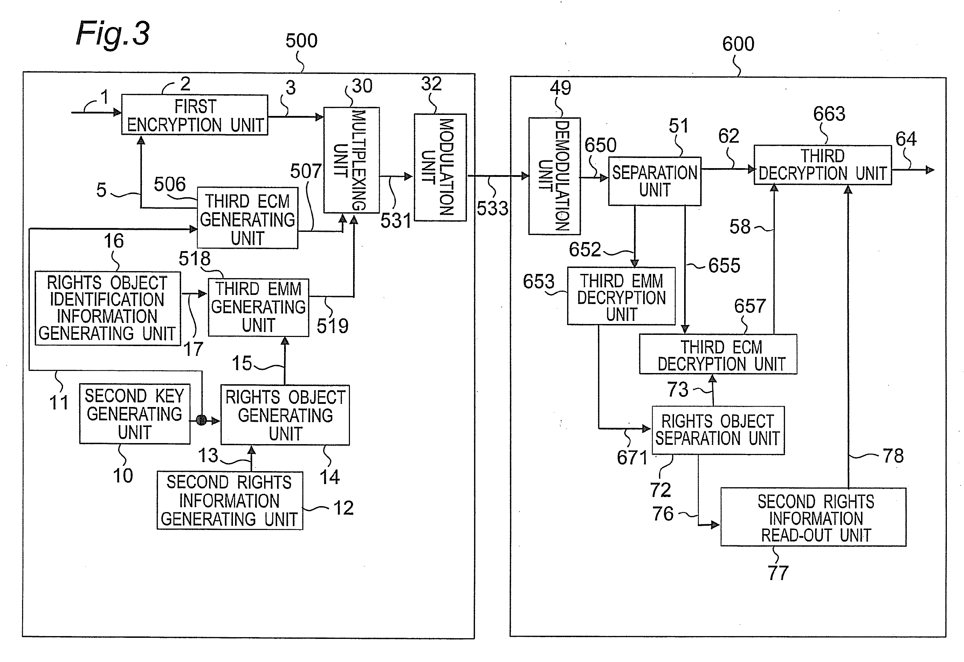

FIG. 3 is a block diagram showing a configuration of a transmitting and receiving apparatus that includes a transmitting apparatus 500 and a receiving apparatus 600 according to Embodiment 3 of the present invention. Here, in FIG. 3, components having a function and a configuration substantially similar to those of the transmitting and receiving apparatus of each embodiment described above are designated by like reference numerals. Then, for their description, the corresponding description of the embodiment should be referred to. Thus, their detailed description is omitted in Embodiment 3.

In the transmitting apparatus 500 according to Embodiment 3 shown in FIG. 3, a digital video bit stream 1 serving as inputted digital information is encrypted by using the first key 5 by the first encryption unit 2, so that a first encrypted digital video bit stream 3 serving as first encrypted information is generated. The generated first encrypted digital video bit stream 3 is sent to the multiplexing unit 30.

The transmitting apparatus according to Embodiment 3 further comprises: a third ECM generating unit 506 for generating a first key 5 and encrypted third ECM information 507; a second key generating unit 10 for generating a second key 11; a second rights information generating unit 12 for generating second rights information 13; a Right Object generating unit 14 for generating Right Object 15; a third EMM generating unit 518 for generating encrypted third EMM information 519 that contains the rights object 15 and the rights object identification information 17; and a modulation unit 32 for modulating the third multiplexed information 531 from the multiplexing unit 30 by a modulation scheme of OFDM (orthogonal frequency division multiplexing).

On the other hand, in the receiving apparatus 600, the demodulation unit 49 demodulates the received third modulated signal 533, and then provides third multiplexed information 650 to the separation unit 51. From the demodulated third multiplexed information 650, the separation unit 51 separates the third EMM information 652, the third ECM information 655, and the first encrypted digital video bit stream 62. Further, the receiving apparatus 600 includes: a third EMM decryption unit 653 into which the third EMM information 652 is inputted; a Right Object separation unit 72 into which the rights object 671 from the third EMM decryption unit 653 is inputted and which separates the second key 73 and the second rights information data 76; a third ECM decryption unit 657 to which the second key 73 separated by the rights object separation unit 72 is provided and which extracts the first key 58; a second rights information read-out unit 77 for extracting second rights information 78 from the second rights information data 76; and a third decryption unit 663 for decrypting the separated first encrypted digital video bit stream 62 on the basis of the first key 58 and the second rights information 78, and then outputting a first digital video bit stream 64.

In the transmitting apparatus 500 shown in FIG. 3, a digital video bit stream 1 serving as inputted digital information encrypted by the first encryption unit 2 by using the first key 5 generated by the third ECM generating unit 506, and then sent as a first encrypted digital video bit stream 3 to the multiplexing unit 30.

The structure of the third ECM generated by the third ECM generating unit 506 is similar to that of Table 1.

The third ECM is encrypted with the second key 11 generated by the second key generating unit 10, so that third ECM information 507 is generated. The generated third ECM information 507 is sent to the multiplexing unit 30.

On the other hand, the second key 11 generated by the second key generating unit 10 is sent to the rights object generating unit 14. The second rights information generating unit 12 generates second rights information 13, and then sends it to the rights object generating unit 14. It is assumed that the second rights information 13 is described in the XML (extensible Markup Language). The rights object generating unit 14 generates rights object information 15 that contains the second key 11 and the second rights information 13, and then sends it to the third EMM generating unit 518.

The third EMM generating unit 518 encrypts the third EMM that contains the rights object 15, so as to generate third EMM information 519, and then sends it to the multiplexing unit 30. The second rights information 13 is encrypted as a part of the first EMM, and hence is protected.

Table 5 shows the structure of the third EMM. As shown in Table 5, the third EMM has a different configuration in the variable part in comparison with the structure of the first EMM shown in Table 2. In the variable part, a descriptor "RO descriptor" corresponding to the rights object identification information 17 is described. After that, the rights object that contains the second key and the second rights information is described. In the receiving apparatus 600, when the descriptor "RO descriptor" is described in the variable part, the presence of the above-mentioned rights object is recognized.

The CRC (Cyclic Redundancy Check) is a check code.

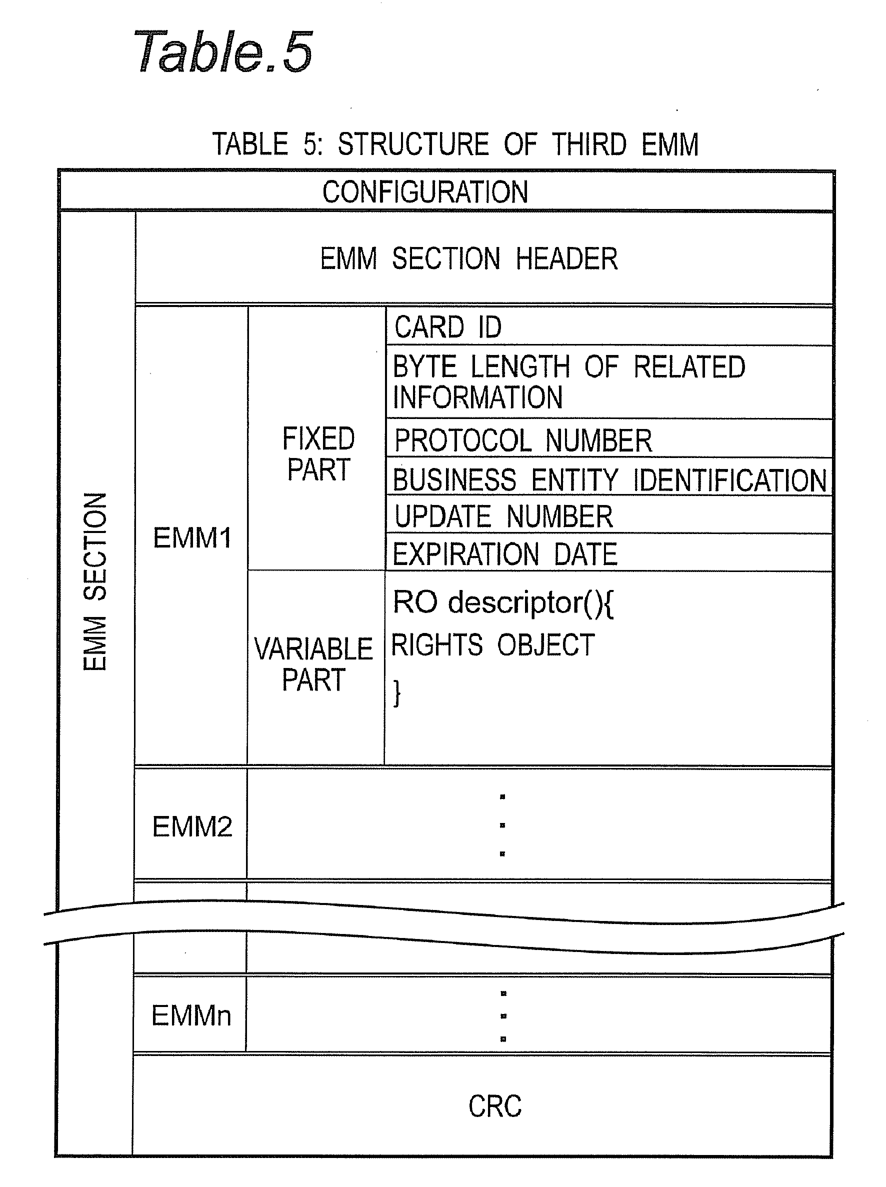

The multiplexing unit 30 multiplexes the first encrypted digital video bit stream 3, the third ECM information 507, and the third EMM information 519, and then provides this third multiplexed information 531 to the modulation unit 32. The modulation unit 32 outputs to the receiving apparatus 600 a third modulated signal 533 obtained by modulating the third multiplexed information 531 by a modulation scheme of OFDM (orthogonal frequency division multiplexing).

On the other hand, in the receiving apparatus 600, the received third modulated signal 533 is demodulated by the demodulation unit 49, so that third multiplexed information 650 is outputted. From the demodulated third multiplexed information 650, the separation unit 51 separates the third EMM information 652, the third ECM information 655, and the first encrypted digital video bit stream 62.

The third EMM information 652 is provided to the third EMM decryption unit 653. The third EMM decryption unit 653 extracts: a card ID (receiving apparatus identification information) of the receiving apparatus 600; the byte length of related information; a protocol number; a business entity identification information which serves as a code for identifying a business entity that operates restricted receiving broadcasting; an update number serving as a number to be increased at the time of updating; and expiration date information, which are shown in Table 5. Then, the third EMM decryption unit 653 detects the descriptor "RO descriptor" in the variable part in the structure of the third EMM, then extracts the rights object 671, and then provides it to the rights object separation unit 72.

The rights object separation unit 72 extracts the second key 73 and then provides it to the third ECM decryption unit 657, and extracts the second rights information data 76 and then provides it to the second rights information read-out unit 77. The third ECM decryption unit 657 performs decryption using the second key 73 so as to extract the third ECM, and then provides the first key 58 to the third decryption unit 663. The second rights information read-out unit 77 reads out and extracts the second rights information 78 from the second rights information data 76, and then provides it to the third decryption unit 663.

The third decryption unit 663 decrypts the first encrypted digital video bit stream 62 by using the first key 58 and the second rights information 78, and then outputs the result as the first digital video bit stream 64.

As described above, the receiving apparatus 600 realizes the read-out of the first encrypted digital video bit stream 62 performed on the basis of the rights information and the keys contained in the ECM/EMM that contains the rights object 671. Thus, in the transmitting and receiving apparatus according to Embodiment 3 of the present invention, the structure of protection using ECM/EMM and Right Object like that in OMA DRM can be realized as a protection structure.

### (Embodiment 4)

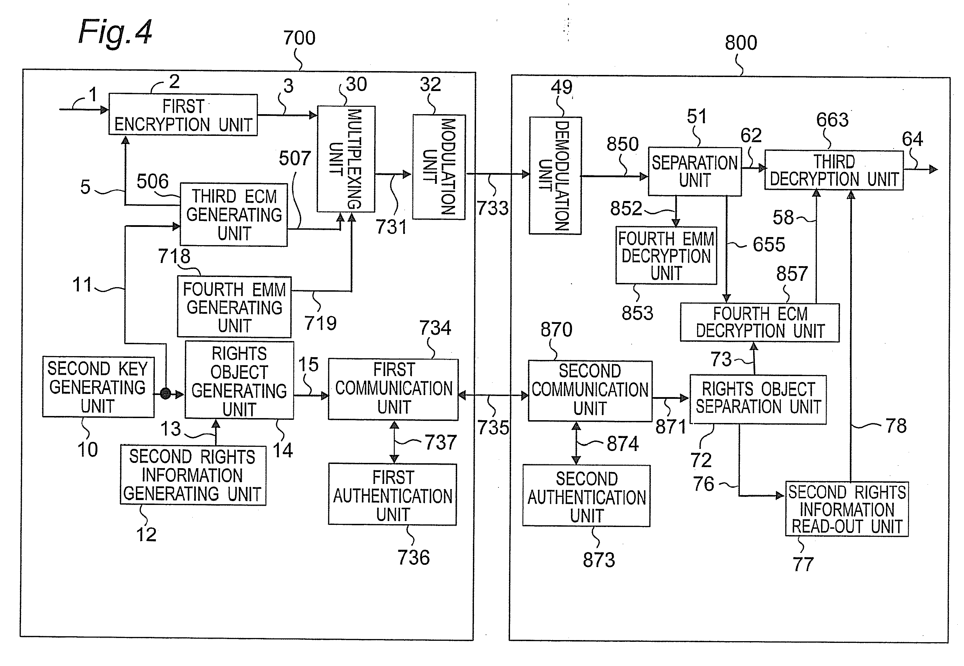

FIG. 4 is a block diagram showing a configuration of a transmitting and receiving apparatus that includes a transmitting apparatus 700 and a receiving apparatus 800 according to Embodiment 4 of the present invention. Here, in FIG. 4, components having a function and a configuration substantially similar to those of the transmitting and receiving apparatus of each embodiment described above are designated by like reference numerals. Then, for their description, the corresponding description of the embodiment should be referred to. Thus, their detailed description is omitted in Embodiment 4.

In the transmitting apparatus 700 according to Embodiment 4 shown in FIG. 4, a digital video bit stream 1 serving as inputted digital information is encrypted by using the first key 5 by the first encryption unit 2, so that a first encrypted digital video bit stream 3 serving as first encrypted information is generated. The generated first encrypted digital video bit stream 3 is sent to the multiplexing unit 30.

The transmitting apparatus 700 according to Embodiment 4 further comprises: a third ECM generating unit 506 for generating a first key 5 and encrypted third ECM information 507; a second key generating unit 10 for generating a second key 11; a second rights information generating unit 12 for generating second rights information 13; a Right Object generating unit 14 for generating Right Object 15; a fourth EMM generating unit 718 for generating encrypted fourth EMM information 719; a modulation unit 32 for modulating the fourth multiplexed information 731 from the multiplexing unit 30 by a modulation scheme of OFDM (orthogonal frequency division multiplexing); a first authentication unit 736 for authenticating a destination to which the rights object 15 is to be transmitted; and a first communication unit 734 for transmitting and receiving authentication information of the first authentication unit 736, and transmits the rights object 15.

On the other hand, in the receiving apparatus 800, the demodulation unit 49 demodulates the received fourth modulated signal 733, and then provides fourth multiplexed information 850 to the separation unit 51. From the fourth multiplexed information 850, the separation unit 51 separates the fourth EMM information 852, the third ECM information 655, and the first encrypted digital video bit stream 62 serving as first encrypted information. Further, the receiving apparatus 800 includes: a fourth EMM decryption unit 853 into which the fourth EMM information 852 is inputted; a Right Object separation unit 72 into which the rights object 871 is inputted from the second communication unit 870 and which separates the second key 73 and the second rights information data 76; a fourth ECM decryption unit 857 to which the second key 73 is provided and which extracts the first key 58; a second rights information read-out unit 77 for extracting second rights information 78 from the second rights information data 76; a third decryption unit 663 for decrypting the separated first encrypteddigital videobit stream 62 on the basis of the first key 58 and the second rights information 78, and then outputting a first digital video bit stream 64; a second authentication unit 873 for receiving the rights object 874 and then authenticating its destination; and a second communication unit 870 for transmitting and receiving authentication information of the second authentication unit 873, and receiving the rights object 874. Further, communication information 735 is sent between the first communication unit 734 and the second communication unit 870. The communication information 735 may be transmitted through a cable Internet, a wireless Internet, or a portable terminal that employs radio waves.

In the transmitting apparatus 700 shown in FIG. 4, a digital video bit stream 1 serving as inputted digital information encrypted by the first encryption unit 2 by using the first key 5 generated by the third ECM generating unit 506, and then outputted as a first encrypted digital video bit stream 3.

The structure of the third ECM generated by the third ECM generating unit 506 is similar to that of Table 1 given above.

The third ECM is encrypted with the second key 11 generated by the second key generating unit 10, so that thirdECM information 507 is generated. Then, it is sent to the multiplexing unit 30.

On the other hand, the second key 11 generated by the second key generating unit 10 is sent to the rights object generating unit 14. The second rights information generating unit 12 generates second rights information 13, and then sends it to the rights object generating unit 14. It is assumed that the second rights information 13 is described in the XML (extensible Markup Language). The rights object generating unit 14 generates rights object information 15 that contains the second key 11 and the second rights information 13, and then sends it to the first communication unit 734. The first communication unit 734 modulates the rights object 15, and then outputs the result as communication information 735.

The fourth EMM generating unit 718 encrypts the fourth EMM so as to generate fourth EMM information 719, and then sends it to the multiplexing unit 30.

Table 6 shows the structure of the fourth EMM. As shown in Table 6, the fourth EMM has a different configuration in the variable part in comparison with the structure of the first EMM shown in Table 5 given above. That is, the descriptor "RO descriptor" and the rights object are not contained in the variable part.

The CRC (Cyclic Redundancy Check) is a check code.

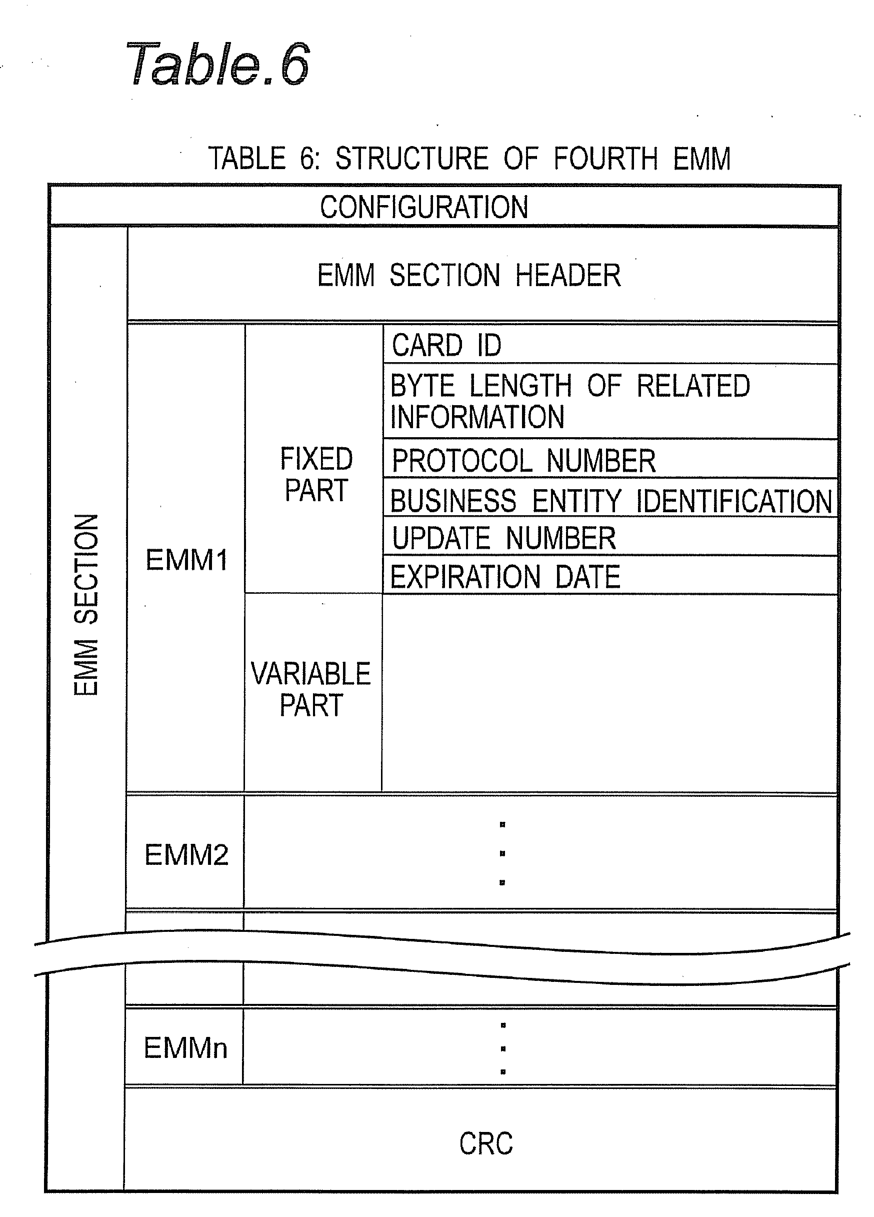

The multiplexing unit 30 multiplexes the first encrypted digital video bit stream 3, the third ECM information 507, and the fourth EMM information 719 so as to form fourth multiplexed information 731, and then provides this fourth multiplexed information 731 to the modulation unit 32. The modulation unit 32 modulates the fourth multiplexed information 731 by a modulation scheme of orthogonal frequency division multiplexing, and then outputs a fourth modulated signal 733 to the receiving apparatus 800.

On the other hand, in the receiving apparatus 800, the received fourth modulated signal 733 is demodulated by the demodulation unit 49, so that fourth multiplexed information 850 is outputted. From the demodulated fourth multiplexed information 850, the separation unit 51 separates the fourth EMM information 852, the third ECM information 655, and the first encrypted digital video bit stream 62.

The fourth EMM information 852 is provided to the fourth EMM decryption unit 853. The fourth EMM decryption unit 853 extracts: the card ID (receiving apparatus identification information) of the receiving apparatus 800; the byte length of related information; a protocol number; a business entity identification information which serves as a code for identifying a business entity that operates restricted receiving broadcasting; an update number serving as a number to be increased at the time of updating; and expiration date information, which are shown in Table 6.

The second authentication unit 873 provides an authentication request to the first authentication unit 736 via the second communication unit 870 and the first communication unit 734. The first authentication unit 736 and the second authentication unit 873 checks validity by exchanging a request and a response. After the validity is confirmed, the first communication unit 734 sends the rights object 15 to the second communication unit 870. The second communication unit 870 sends the received rights object 871 to the rights object separation unit 72.

The rights object separation unit 72 extracts the second key 73 and then provides it to the fourth ECM decryption unit 857, and extracts the second rights information data 76 and then provides it to the second rights information read-out unit 77. The second rights information read-out unit 77 reads out and extracts the second rights information 78 from the second rights information data 76, and then provides it to the third decryption unit 663.

The third decryption unit 663 decrypts the first encrypted digital video bit stream 62 by using the first key 58 and the second rights information 78, and then outputs the result as the first digital video bit stream 64.

As described above, the receiving apparatus 800 realizes the read-out of the first encrypted digital video bit stream 62 performed on the basis of the rights object 871 and of the keys contained in the ECM/EMM. Thus, in the transmitting and receiving apparatus according to Embodiment 4 of the present invention, the ECM/EMM and the rights object like that in OMA DRM can be realized as a protection structure that employs a structure of contents protection transmitted through a path different from that for the fourth modulated signal 733. As a result, contents may be accumulated temporarily in the receiving apparatus 800. Then, at the time of usage, the rights obj ect maybe received from the transmitting apparatus 700. This provides remarkable convenience in the case that a portable terminal is used as the receiving apparatus 800.

### (Embodiment 5)

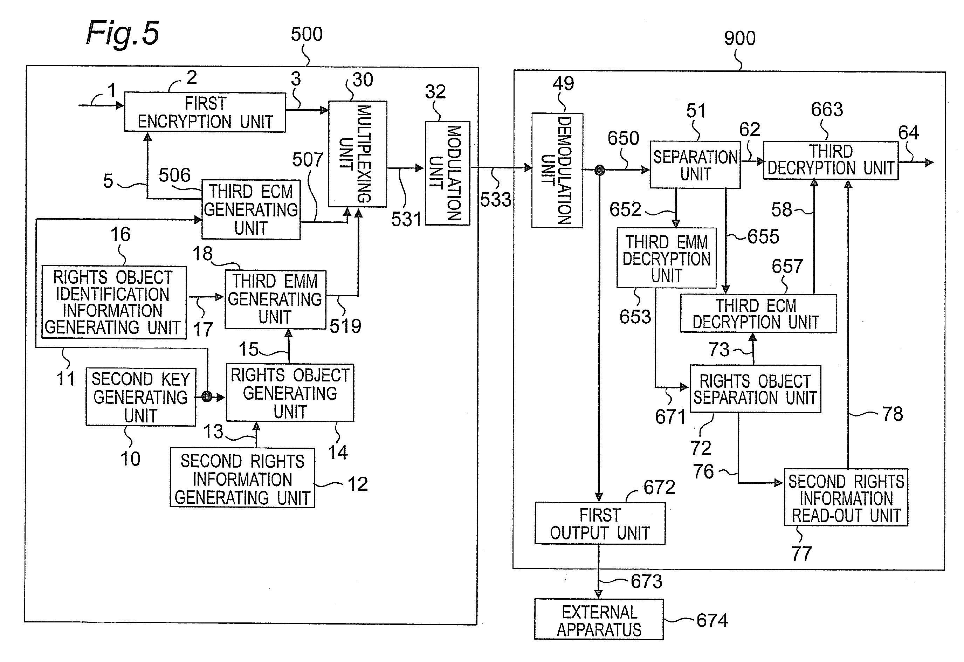

FIG. 5 is a block diagram showing a configuration of a transmitting and receiving apparatus that includes a transmitting apparatus 500, a receiving apparatus 900, and an external apparatus 674 according to Embodiment 5 of the present invention. The receiving apparatus 900 and the external apparatus 674 constitute a home network. In FIG. 5, components having a function and a configuration substantially similar to those of the transmitting and receiving apparatus of each embodiment described above are designated by like reference numerals. Then, for their description, the corresponding description of the embodiment shouldbe referred to. Thus, their detailed description is omitted in Embodiment 5.

The transmitting apparatus 500 according to Embodiment 5 shown in FIG. 5 has a similar configuration to that of the transmitting apparatus 500 according to Embodiment 3 of the present invention.

On the other hand, the receiving apparatus 900 is basically similar to that of Embodiment 3 of the present invention, but is different in the point that a first output unit 672 is provided. The first output unit 672 sends the thirdmultiplexed information 650 as the first output signal 673 to the external apparatus 674. The external apparatus 674 is a portable terminal such as a portable phone and a portable video player. Further, as for the physical form, the first output signal 673 may be a cable signal like that in an Ethernet (registered trademark), or alternatively a wireless signal such as "802.11b".

As described above, in the receiving apparatus 900, by virtue of the rights information and the keys contained in the ECM/EMM that contains the rights object 671 identified by the rights object identification information, read-out of the first encrypted digital video bit stream 62 can be realized. In addition, contents can be outputted to the external apparatus 674 with using the structure of contents protection using ECM/EMM and Right Object like that in OMA DRM.

### (Embodiment 6)

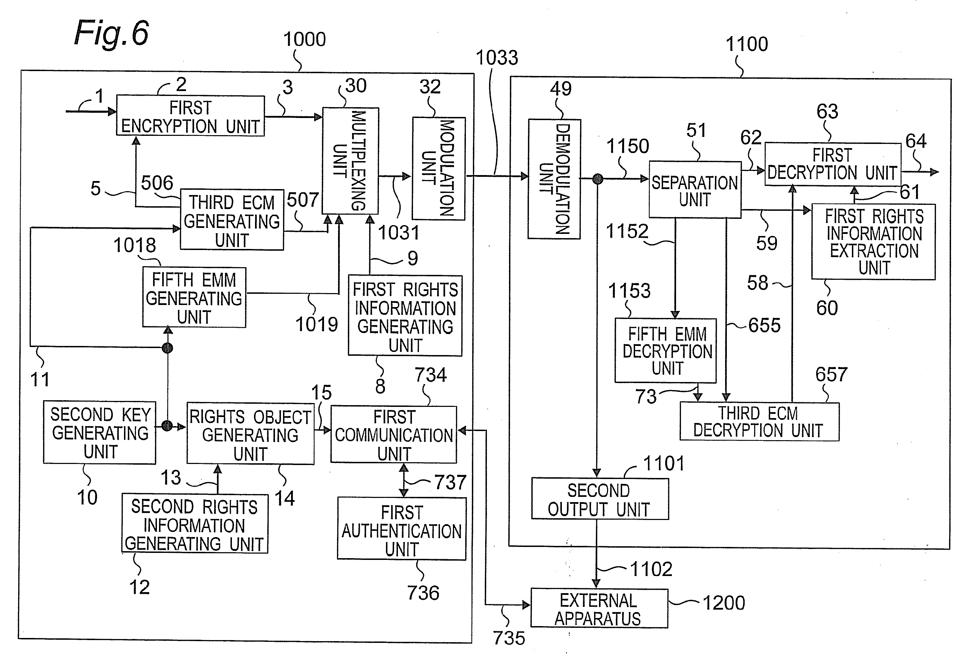

FIG. 6 is a block diagram showing a configuration of a transmitting and receiving apparatus that includes a transmitting apparatus 1000, a receiving apparatus 1100, and an external apparatus 1200 according to Embodiment 6 of the present invention. In FIG. 6, components having a function and a configuration substantially similar to those of the transmitting and receiving apparatus of each embodiment described above are designated by like reference numerals. Then, for their description, the corresponding description of the embodiment should be referred to. Thus, their detailed description is omitted in Embodiment 6.

In the transmitting apparatus 1000 according to Embodiment 6 shown in FIG. 6, a digital video bit stream 1 serving as inputted digital information is encrypted using the first key 5 by the first encryption unit 2, so that a first encrypted digital video bit stream 3 serving as first encrypted information is generated. The generated first encrypted digital video bit stream 3 is sent to the multiplexing unit 30.

The transmitting apparatus 1000 according to Embodiment 6 further comprises: a third ECM generating unit 506 for generating a first key 5 and encrypted third ECM information 507; a second key generating unit 10 for generating a second key 11; a second rights information generating unit 12 for generating second rights information 13; a Right Object generating unit 14 for generating Right Object 15; a fifth EMM generating unit 1018 for generating encrypted fifth EMM information 1019; a first rights information generating unit 8 for generating first rights information 9; and a modulation unit 32 for modulating the fifth multiplexed information 1031 from the multiplexing unit 30 by a modulation scheme of OFDM (orthogonal frequency division multiplexing), and then outputting a fifth modulated signal 1033.

On the other hand, in the receiving apparatus 1100, the demodulation unit 49 demodulates the received fifth modulated signal 1033, and then provides fifth multiplexed information 1150 to the separation unit 51. From the fifth multiplexed information 1150, the separation unit 51 separates respectively the fifth EMM information 1152, the third ECM information 655, the PMT (Program Map Table) information 59, and the first encrypted digital video bit stream 62 serving as first encrypted information. Further, the receiving apparatus 1100 includes: a fifth EMM decryption unit 1153 into which the fifth EMM information 1152 is inputted; a third ECM decryption unit 657 to which the second key 73 is provided and which extracts the first key 58; a first rights information extraction unit 60 for extracting the first rights information 61 from the PMT (Program Map Table) information 59; a first decryption unit 63 for decrypting the separated first encrypted digital video bit stream 62 on the basis of the first key 58 and the first rights information 61, and then outputting a first digital video bit stream 64; and a second output unit 1101 into which the fifth multiplexed information 1150 is inputted. The second output unit 1101 outputs a second output signal 1102. As for the physical form, this signal transmission may be cable transmission like Ethernet (registered trademark), or alternatively wireless transmission such as "802.11b". This transmission, together with the receiving apparatus 1100, constitutes a part of the home network.

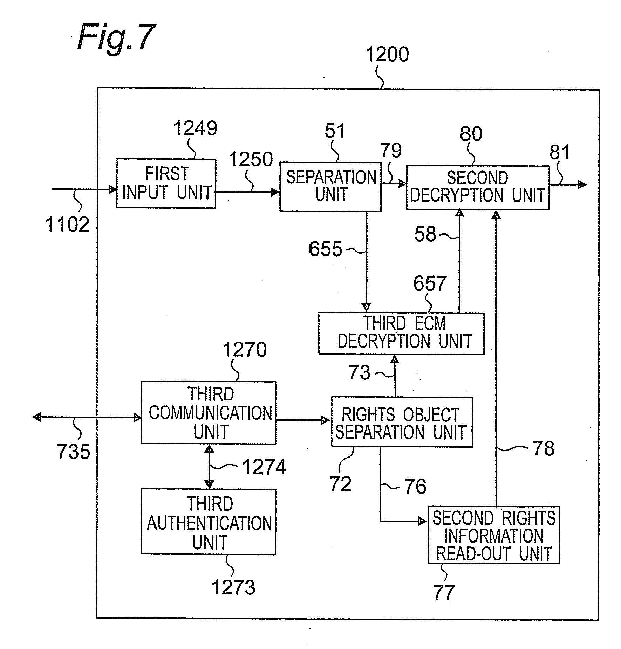

The external apparatus 1200 is, for example, a portable phone, a portable video player, or an in-vehicle terminal. Its configuration is shown in FIG. 7. FIG. 7 is a block diagram showing a configuration of the external apparatus 1200 according to Embodiment 6. The external apparatus 1200 receives the fifth multiplexed information 1150 as the second output signal 1102 from the second output unit 1101 of the receiving apparatus 1100, and then receives the rights object information 15 as a communication signal 735 from the first communication unit 734 of the transmitting apparatus 1000. As shown in FIG. 7, the external apparatus 1200 includes a first input unit 1249, a separation unit 51, a second decryption unit 80, a third ECM decryption unit 657, a third communication unit 1270, a third authentication unit 1273, a Right Object separation unit 72, and a second rights information read-out unit 77.

In the transmitting apparatus 1000 shown in FIG. 6, a digital video bit stream 1 serving as inputted digital information encrypted by the first encryption unit 2 by using the first key 5 generated by the third ECM generating unit 506, and then outputted as a first encrypted digital video bit stream 3.

The structure of the third ECM generated by the third ECM generating unit 506 is similar to that of Table 1 given above. The third ECM is encrypted with the second key 11 generated by the second key generating unit 10, so that third ECM information 507 is generated. Then, it is sent to the multiplexing unit 30.

On the other hand, the second key 11 generated by the second key generating unit 10 is sent to the rights object generating unit 14. The second rights information generating unit 12 generates second rights information 13, and then sends it to the rights object generating unit 14. It is assumed that the second rights information 13 is described in the XML (extensible Markup Language). The rights object generating unit 14 generates Right Object 15 that contains the second key 11 and the second rights information 13, and then sends it to the first communication unit 734. The first communication unit 734 modulates the rights object 15, and then outputs the result as communication information 735.

The fifth EMM generating unit 1018 encrypts the fifth EMM so as to generate fifth EMM information 1019, and then sends it to the multiplexing unit 30.

Table 7 shows the structure of the fifth EMM. As shown in Table 7, the fifth EMM has a descriptor "EncKey descriptor" and the second key in the variable part. The CRC (Cyclic Redundancy Check) is a check code.

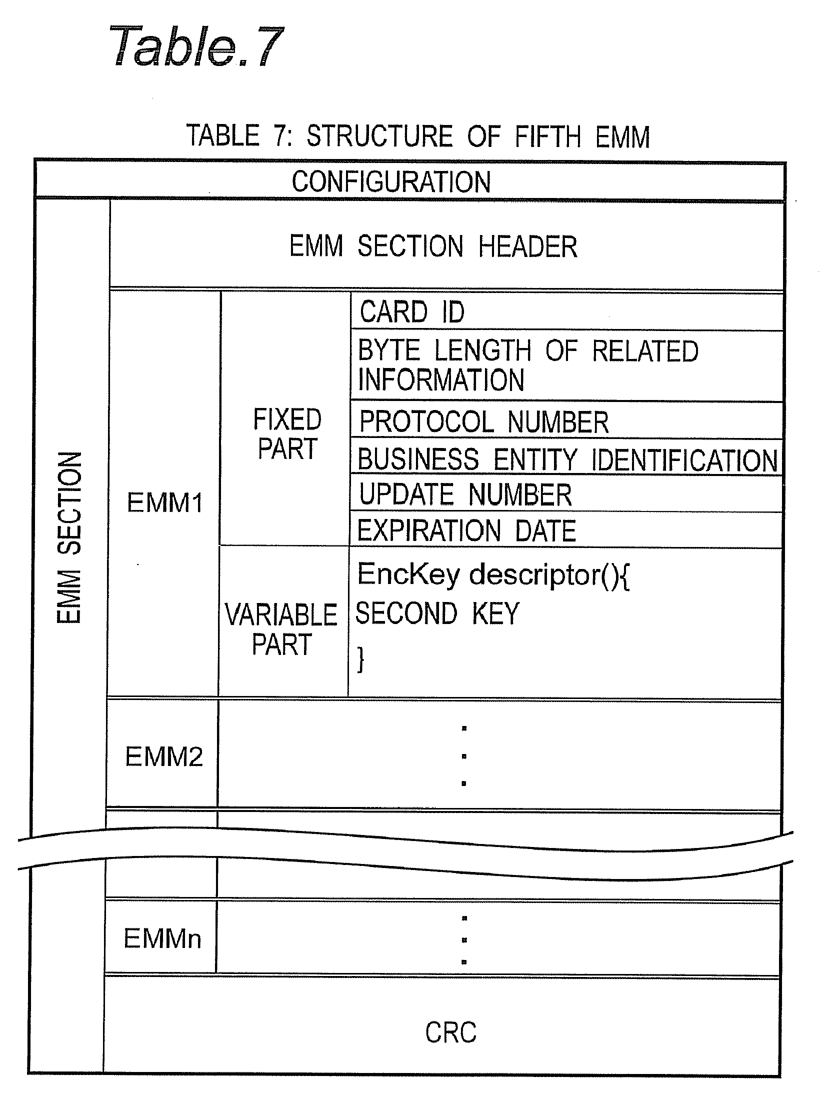

The multiplexing unit 30 multiplexes the first encrypted digital video bit stream 3, the third ECM information 507, and the fifth EMM information 1019, and then provides the fifth multiplexed information 1031 to the modulation unit 32. The modulation unit 32 modulates the fifth multiplexed information 1031 by a modulation scheme of OFDM (orthogonal frequency division multiplexing) and then outputs a fifth modulated signal 1033 to the receiving apparatus 1100.

On the other hand, in the receiving apparatus 1100, the received fifth modulated signal 1033 is demodulated by the demodulation unit 49, so that fifthmultiplexed information 1150 is generated. From the demodulated fifth multiplexed information 1150, the separation unit 51 separates the fifth EMM information 1152, the third ECM information 655, the PMT (Program Map Table) information 59, and the first encrypted digital video bit stream 62.

The fifth EMM information 1152 is provided to the fifth EMM decryption unit 1153. The fifth EMM decryption unit 1153 extracts: the card ID (receiving apparatus identification information) of the receiving apparatus 1100; the byte length of related information; a protocol number; a business entity identification information which serves as a code for identifying a business entity that operates restricted receiving broadcasting; an update number serving as a number to be increased at the time of updating; and expiration date information, which are shown in Table 7.

The fifth EMM decryption unit 1153 extracts the second key 73, and then provides it to the third ECM decryption unit 657. Then, the third ECM decryption unit 657 extracts the first key 58 and then provides it to the first EMM decryption unit 63.

The first decryption unit 63 decrypts the first encrypted digital video bit stream 62 by using the first key 58 and the first rights information 61, and then outputs the result as the first digital video bit stream 64.

The second output unit 1101 outputs the fifth multiplexed information 1150 as the second output signal 1102 to the external apparatus 1200.

In the external apparatus 1200, the first input unit 1249 receives the fifth multiplexed information 1150 as the second output signal 1102 from the receiving apparatus 1100, and then provides the signal as the sixth multiplexed information 1250 to the separation unit 51. The separation unit 51 separates the sixth multiplexed information 1250 into the third ECM information 655 and the second encrypted digital video bit stream 79, and then outputs the second encrypted digital video bit stream 79 to the second decryption unit 80.

The third authentication unit 1273 of the external apparatus 1200 performs authentication with the first authentication unit 736 of the transmitting apparatus 1000 via the third communication unit 1270 and the first communication unit 734 of the transmitting apparatus 1000. Then, after the authentication is performed successfully, the rights object 15 is received. Then, the rights object separation unit 72 separates the second rights object 76. The second rights object 76 is read out by the second rights information read-out unit 77. The read-out second rights information 78 is outputted to the second decryption unit 80. Further, the third ECM decryption unit 657 decrypts the third ECM information 655 by using the second key 73 so as to extract the first key 58. The extracted first key 58 is provided to the second decryption unit 80.

The second decryption unit 80 reads out the second encrypted digital video bit stream 79 on the basis of the second rights information 78 by using the first key 58, and then outputs a second digital video bit stream 81.

As described above, in the transmitting and receiving apparatus according to Embodiment 6, read-out of the first encrypted digital video bit stream 3 by using the keys contained in the ECM/EMM can be realized. The rights object 15 contains rights different from the first rights information. Thus, in an external apparatus 1200 like a portable terminal, decryption can be performed on the basis of a permission different from that in the decryption in the receiving apparatus 1100 permitted by the first rights information 9 newly acquired from the operator side. As a result, contents may be accumulated temporarily in the receiving apparatus 1100 such as a set top box, and then may be transferred to the external apparatus 1200 such as a portable terminal and an in-vehicle terminal via a wireless LAN. Then, at the time of use of the contents, the external apparatus 1200 may receive the rights object from the transmitting apparatus 1000, for example, via radio waves. Thus, the transmitting and receiving apparatus according to Embodiment 6 is a configuration that provides remarkable convenience.

The present invention is useful especially in the case that in digital broadcasting using the structure of protection based on ECM/EMM, copyright management is used together that employs the structure of protection based on Right Object like in OMA DRM.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A transmitting apparatus comprising:
a first encryption unit for encrypting inputted digital information with a first key so as to generate first encrypted information;
a second key generating unit for generating a second key;
a second encryption unit for encrypting said inputted digital information with said second key so as to generate second encrypted information;
a first rights information generating unit for generating first rights information;
a second rights information generating unit for generating second rights information;
a Right Obj ect generating unit for generating Right Obj ect that contains said second rights information and said second key;
a Right Obj ect identification information generating unit for generating rights object identification information that identifies as being said rights object;
a first EMM generating unit for generating a third key, and then generating and encrypting a first EMM (Entitlement Management Message) that contains said generated third key, said rights object, said rights object identification information, and receiving apparatus identification information, so as to generate first EMM information;
a first ECM generating unit for generating a first ECM (Entitlement Control Message) that contains said first key, and then encrypting said generated first ECM with said third key so as to generate first ECM information; and
a multiplexing unit for multiplexing said first ECM information, said first EMM information, said first encrypted information, said second encrypted information, and said first rights information, and then outputting the multiplexed information.

2. A transmitting apparatus comprising:
a first encryption unit for encrypting inputted digital information with a first key so as to generate first encrypted information;
a second key generating unit for generating a second key;
a first rights information generating unit for generating first rights information;
a second encryption unit for encrypting said inputted digital information with said second key so as to generate second encrypted information;
a second rights information generating unit for generating second rights information;
a Right Object generating unit for generating Right Object that contains said second rights information and said second key;
a Right Object identification information generating unit for generating rights object identification information that identifies as being said rights object;
a second EMM generating unit for generating a third key, then generating a second EMM from said generated third key and receiving apparatus identification information, and then encrypting it so as to generate second EMM information;
a second ECM generating unit for generating a second ECM that contains said first key, said rights object, and said rights object identification information, and then encrypting said generated second ECM with said third key so as to generate second ECM information; and
a multiplexing unit for multiplexing said second ECM information, said second EMM information, said first encrypted information, said second encrypted information, and said first rights information, and then outputting the multiplexed information.

3. A receiving apparatus comprising:
a separation unit for separating inputted multiplexed information, and then outputting encrypted first ECM information, encrypted first EMM information, first encrypted information, second encrypted information, and PMT information;
a first EMM decryption unit for extracting receiving apparatus identification information, Right Object, and a third key from said first EMM information;
a Right Object separation unit for extracting a second key and second rights information data from said rights object;
a second rights information read-out unit for extracting second rights information from said second rights information data;
a first ECM decryption unit for decrypting a first ECM from said first ECM information by using said third key, and then outputting a first key;
a first rights information extraction unit for extracting first rights information from said PMT information;
a first decryption unit for decrypting said first encrypted information on the basis of said first rights information by using said first key; and
a second decryption unit for decrypting said second encrypted information on the basis of said second rights information by using said second key.

4. A receiving apparatus comprising:
a separation unit for separating inputted multiplexed information, and then outputting encrypted second ECM information, encrypted second EMM information, first encrypted information, second encrypted information, and PMT information;
a second EMM decryption unit for extracting receiving apparatus identification information and a third key from said second EMM information;
a second ECM decryption unit for decrypting a second ECM from said second ECM information by using said third key, and then extracting Right Object and a first key;
a Right Object separation unit for extracting a second key and second rights information data from said rights object;
a second rights information read-out unit for extracting second rights information from said second rights information data;
a first rights information extraction unit for extracting first rights information from said PMT information;
a first decryption unit for decrypting said first encrypted information on the basis of said first rights information by using said first key; and
a second decryption unit for decrypting said second encrypted information on the basis of said second rights information by using said second key.

5. A transmitting and receiving apparatus comprising a transmitting apparatus and a receiving apparatus, wherein
said transmitting apparatus includes:
a first encryption unit for encrypting inputted digital information with a first key so as to generate first encrypted information;
a second key generating unit for generating a second key;
a second encryption unit for encrypting said inputted digital information with said second key so as to generate second encrypted information;
a first rights information generating unit for generating first rights information;
a second rights information generatingunit for generating second rights information;
a Right Object generating unit for generating Right Object that contains said second rights information and said second key;
a Right Object identification information generating unit for generating rights object identification information that identifies as being said rights object;
a first EMM generating unit for generating a third key, and then generating and encrypting a first EMM (Entitlement Management Message) that contains said generated third key, said rights object, said rights object identification information, and receiving apparatus identification information, so as to generate first EMM information;
a first ECM generating unit for generating a first ECM (Entitlement Control Message) that contains said first key, and then encrypting said generated first ECM with said third key so as to generate first ECM information; and
a multiplexing unit for multiplexing said first ECM information, said first EMM information, said first encrypted information, said second encrypted information, and said first rights information, and then outputting the multiplexed information, and wherein
said receiving apparatus includes:
a separation unit for separating inputted multiplexed information, and then outputting encrypted first ECM information, encrypted first EMM information, first encrypted information, second encrypted information, and PMT information;
a first EMM decryption unit for extracting receiving apparatus identification information, Right Object, and a third key from said first EMM information;
a Right Object separation unit for extracting a second key and second rights information data from said rights object;
a second rights information read-out unit for extracting second rights information from said second rights information data;
a first ECM decryption unit for decrypting a first ECM from said first ECM information by using said third key, and then outputting a first key;
a first rights information extraction unit for extracting first rights information from said PMT information;
a first decryptionunit for decrypting said first encrypted information on the basis of said first rights information by using said first key; and
a second decryption unit for decrypting said second encrypted information on the basis of said second rights information by using said second key.

6. A transmitting and receiving apparatus comprising a transmitting apparatus and a receiving apparatus, wherein
said transmitting apparatus includes:
a first encryption unit for encrypting inputted digital information with a first key so as to generate first encrypted information;
a second key generating unit for generating a second key;
a first rights information generating unit for generating first rights information;
a second encryption unit for encrypting said inputted digital information with said second key so as to generate second encrypted information;
a second rights information generating unit for generating second rights information;
a Right Obj ect generating unit for generating Right Obj ect that contains said second rights information and said second key;
a Right Object identification information generating unit for generating rights object identification information that identifies as being said rights object;
a second EMM generating unit for generating a third key, then generating a second EMM from said generated third key and receiving apparatus identification information, and then encrypting it so as to generate second EMM information;
a second ECM generating unit for generating a second ECM that contains said first key, said rights obj ect, and said rights object identification information, and then encrypting said generated second ECM with said third key so as to generate second ECM information; and
a multiplexing unit for multiplexing said second ECM information, said second EMM information, said first encrypted information, said second encrypted information, and said first rights information, and then outputting the multiplexed information, and wherein
said receiving apparatus includes:
a separation unit for separating inputted multiplexed information, and then outputting encrypted second ECM information, encrypted second EMM information, first encrypted information, second encrypted information, and PMT information;
a second EMM decryption unit for extracting receiving apparatus identification information and a third key from said second EMM information;
a second ECM decryption unit for decrypting a second ECM from said second ECM information by using said third key, and then extracting Right Object and a first key;
a Right Object separation unit for extracting a second key and second rights information data from said rights object;
a second rights information read-out unit for extracting second rights information from said second rights information data;
a first rights information extraction unit for extracting first rights information from said PMT information;
a first decryption unit for decrypting said first encrypted information on the basis of said first rights information by using said first key; and
a second decryption unit for decrypting said second encrypted information on the basis of said second rights information by using said second key.

7. A transmitting apparatus comprising:
a first encryption unit for encrypting inputted digital information with a first key so as to generate first encrypted information;
a second key generating unit for generating a second key;
a second rights information generating unit for generating second rights information;
a Right Obj ect generating unit for generating Right Obj ect that contains said second rights information and said second key;
a Right Object identification information generating unit for generating rights object identification information that identifies as being said rights object;
a third EMM generating unit for generating and encrypting a third EMM (Entitlement Management Message) that contains said rights object, said rights object identification information, and receiving apparatus identification information, so as to generate third EMM information;
a third ECM generating unit for generating a third ECM (Entitlement Control Message) that contains said first key, and then encrypting said generated third ECM with said second key so as to generate third ECM information; and
a multiplexing unit for multiplexing said third ECM information, said third EMM information, and said first encrypted information, and then outputting multiplexed information.

8. A transmitting apparatus comprising:
a first encryption unit for encrypting inputted digital information with a first key so as to generate first encrypted information;
a second key generating unit for generating a second key;
a second rights information generating unit for generating second rights information;
a Right Obj ect generating unit for generating Right Object that contains said second rights information and said second key;
a fourth EMM generating unit for generating and encrypting a fourth EMM (Entitlement Management Message) that contains receiving apparatus identification information, so as to generate fourth EMM information;
a third ECM generating unit for generating a third ECM (Entitlement Control Message) that contains said first key, and then encrypting said generated third ECM with said second key so as to generate third ECM information;
a multiplexing unit for multiplexing said third ECM information, said fourth EMM information, and said first encrypted information, and then outputting multiplexed information;
a first authentication unit for authenticating a destination to which said rights object is to be transmitted; and
a first communication unit for transmitting and receiving authentication information of said first authentication unit, and transmitting said rights object.

9. A transmitting apparatus comprising:
a first encryption unit for encrypting inputted digital information with a first key so as to generate first encrypted information;
a second key generating unit for generating a second key;
a first rights information generating unit for generating first rights information;
a second rights information generatingunit for generating second rights information;
a Right Object generating unit for generating Right Object that contains said second rights information and said second key;
a fifth EMM generating unit for generating and encrypting a fifth EMM (Entitlement Management Message) that contains receiving apparatus identification information and a second key, so as to generate fifth EMM information;
a third ECM generating unit for generating a third ECM (Entitlement Control Message) that contains said second key, and then encrypting said generated third ECM with said second key so as to generate third ECM information;
a multiplexing unit for multiplexing said third ECM information, said fifth EMM information, said first encrypted information, and said first rights information, and then outputting the multiplexed information;
a first authentication unit for authenticating a destination to which said rights object is to be transmitted; and
a first communication unit for transmitting and receiving authentication information of said first authentication unit, and transmitting said rights object.

10. A receiving apparatus comprising:
a separation unit for separating inputted multiplexed information, and then outputting encrypted thirdECM information, encrypted third EMM information, and first encrypted information;
a third EMM decryption unit for extracting receiving apparatus identification information and Right Object from said third EMM information;
a Right Object separation unit for extracting a second key and second rights information data from said rights object;
a second rights information read-out unit for extracting second rights information from said second rights information data;
a third ECM decryption unit for decrypting a third ECM from said third ECM information by using said second key, and then outputting a first key; and
a third decryption unit for decrypting said first encrypted information on the basis of said second rights information by using said first key.

11. A receiving apparatus comprising:
a separation unit for separating inputted multiplexed information, and then outputting encrypted fourth ECM information, encrypted fourth EMM information, and first encrypted information;
a fourth EMM decryption unit for extracting receiving apparatus identification information from said fourth EMM information;
a second authentication unit for authenticating a destination by which Right Object is to be received;
a second communication unit for transmitting and receiving authentication information of said second authentication unit, and receiving said rights object;
a Right Object separation unit for extracting a second key and second rights information data from said rights object;
a second rights information read-out unit for extracting second rights information from said second rights information data;
a fourth ECM decryption unit for decrypting a fourth ECM from said fourth ECM information by using said second key, and then outputting a first key; and
a thirddecryption unit for decrypting said first encrypted information on the basis of said second rights information by using said first key.

12. A receiving apparatus comprising:
a separation unit for separating inputted multiplexed information, and then outputting encrypted third ECM information, encrypted third EMM information, and first encrypted information;
a third EMM decryption unit for extracting receiving apparatus identification information and Right Object from said third EMM information;
a Right Object separation unit for extracting a second key and second rights information data from said rights object;
a second rights information read-out unit for extracting second rights information from said second rights information data;
a third ECM decryption unit for decrypting a third ECM from said third ECM information by using said second key, and then outputting a first key;
a third decryption unit for decrypting said first encrypted information on the basis of said second rights information by using said first key; and
a first output unit for outputting said inputted multiplexed information and said rights object.

13. A receiving apparatus comprising:
a separation unit for separating inputted multiplexed information, and then outputting encrypted thirdECM information, encrypted fifth EMM information, first encrypted information, and PMT information;
a fifth EMM decryption unit for extracting receiving apparatus identification information and a second key from said fifth EMM information;
a first rights information extraction unit for extracting first rights information from said PMT information;
a third ECM decryption unit for decrypting a third ECM from said third ECM information by using said second key, and then outputting a first key;
a first decryption unit for decrypting said first encrypted information on the basis of said first rights information by using said first key; and
a second output unit for outputting said inputted multiplexed information.

14. A transmitting and receiving apparatus comprising a transmitting apparatus, a receiving apparatus, and an external apparatus, wherein
said transmitting apparatus includes:
a first encryption unit for encrypting inputted digital information with a first key so as to generate first encrypted information;
a second key generating unit for generating a second key;
a first rights information generating unit for generating first rights information;
a second rights information generating unit for generating second rights information;
a Right Obj ect generating unit for generating Right Obj ect that contains said second rights information and said second key;
a fifth EMM generating unit for generating and encrypting a fifth EMM (Entitlement Management Message) that contains receiving apparatus identification information and a second key, so as to generate fifth EMM information;
a third ECM generating unit for generating a third ECM (Entitlement Control Message) that contains said second key, and then encrypting said generated third ECM with said second key so as to generate third ECM information;
a multiplexing unit for multiplexing said third ECM information, said fifth EMM information, said first encrypted information, and said first rights information, and then outputting the multiplexed information;
a first authentication unit for authenticating a destination to which said rights object is to be transmitted; and
a first communication unit for transmitting and receiving authentication information of said first authentication unit, and transmitting said rights object, wherein
said receiving apparatus includes:
a separation unit for separating inputted multiplexed information, and then outputting encrypted third ECM information, encrypted fifth EMM information, first encrypted information, and PMT information;
a fifth EMM decryption unit for extracting receiving apparatus identification information and a second key from said fifth EMM information;
a first rights information extraction unit for extracting first rights information from said PMT information;
a third ECM decryption unit for decrypting a third ECM from said third ECM information by using said second key, and then outputting a first key;
a first decryption unit for decrypting said first encrypted information on the basis of said first rights information by using said first key; and
a second output unit for outputting said inputted multiplexed information, and wherein
said external apparatus includes:
a third authentication unit for authenticating a destination by which Right Object is to be received;
a third communication unit for transmitting and receiving authentication information of said third authentication unit, and receiving said rights object;
a Right Object separation unit for extracting a second key and second rights information data from said rights object;
a second rights information read-out unit for extracting second rights information from said second rights information data;
a third ECM decryption unit for decrypting a third ECM from said third ECM information by using said second key, and then outputting a first key; and
a second decryption unit for decrypting said first encrypted information on the basis of said second rights information by using said first key.
